# EUROPEAN PATENT APPLICATION

(11) **EP 4 503 633 A1**
(43) Date of publication of application: **05.02.2025**
(21) Application number: 23774486.7
(22) Date of filing: 06.03.2023
(51) Int. Cl.: H04N 23/60, G06F 3/01, G06F 3/04815, G06T 19/00, H04N 23/63, H04N 23/661

(54) **INFORMATION PROCESSING DEVICE, INFORMATION PROCESSING METHOD, AND PROGRAM**

(30) Priority: 24.03.2022 JP 2022047949
(71) Applicant: Sony Group Corporation, Tokyo 108-0075 (JP)
(72) Inventor: TAJIMA Daisuke, Tokyo 108-0075 (JP); ICHIKAWA Miwa, Tokyo 108-0075 (JP); ISHII Tomohiro, Tokyo 108-0075 (JP); YUMIBA Hiromu, Tokyo 108-0075 (JP)
(74) Representative: D Young & Co LLP
(86) International application number: PCT/JP2023/008363
(87) International publication number: WO 2023/181887

(57) **Abstract**

The present disclosure relates to an information processing device, an information processing method, and a program for enabling imaging as intended by an instructing person.

A display control unit is configured to cause a captured image captured by a camera in a first space in which an imaging target object exists to be displayed. A superimposition control unit is configured to cause, on the basis of an imaging position and an imaging angle, for the imaging target object, set in a second space that is being subjected to space sharing with the first space, an imaging instruction guide that guides imaging at the imaging angle to be superimposed and displayed as a virtual object, at a position, on the captured image, corresponding to the imaging position. The present disclosure can be applied to a three-dimensional space sharing system that synchronizes a VR space and a real space.

## Description

### TECHNICAL FIELD

The present disclosure relates to an information processing device, an information processing method, and a program, and particularly, to an information processing device, an information processing method, and a program for enabling imaging as intended by an instructing person.

### BACKGROUND ART

Patent Document 1 discloses a technology for assisting a user in imaging of a photograph at the same position and camera angle as those of a previously imaged photograph.

### CITATION LIST

### PATENT DOCUMENT

Patent Document 1: Japanese Patent Application Laid-Open No. 2011-239361

### SUMMARY OF THE INVENTION

### PROBLEMS TO BE SOLVED BY THE INVENTION

Incidentally, in a case where a worker at a work site has worked under instructions from an instructing person in a remote place, it has not been easy for the worker to perform imaging as intended by the instructing person.

The present disclosure has been made in view of such a situation, and an object thereof is to enable imaging as intended by an instructing person.

### SOLUTIONS TO PROBLEMS

An information processing device of the present disclosure is an information processing device including: a display control unit configured to cause a captured image captured by a camera in a first space in which an imaging target object exists to be displayed; and a superimposition control unit configured to cause, on the basis of an imaging position and an imaging angle, for the imaging target object, set in a second space that is being subjected to space sharing with the first space, an imaging instruction guide that guides imaging at the imaging angle to be superimposed and displayed as a virtual object, at a position, on the captured image, corresponding to the imaging position.

An information processing method of the present disclosure is an information processing method executed by an information processing device, the method including:
displaying a captured image, the captured image being captured by a camera in a first space in which an imaging target object exists; and superimposing and displaying, as a virtual object, on the basis of an imaging position and an imaging angle, for the imaging target object, set in a second space that is being subjected to space sharing with the first space, an imaging instruction guide that guides imaging at the imaging angle, at a position, on the captured image, corresponding to the imaging position.

A program of the present disclosure is a program that causes a computer to execute processing including: displaying a captured image, the captured image being captured by a camera in a first space in which an imaging target object exists; and superimposing and displaying, as a virtual object, on the basis of an imaging position and an imaging angle, for the imaging target object, set in a second space that is being subjected to space sharing with the first space, an imaging instruction guide that guides imaging at the imaging angle, at a position, on the captured image.

In the present disclosure, a captured image captured by a camera in a first space in which an imaging target object exists is displayed. On the basis of an imaging position and an imaging angle, for the imaging target object, set in a second space that is being subjected to space sharing with the first space, an imaging instruction guide that guides imaging at the imaging angle is superimposed and displayed as a virtual object, at a position, on the captured image, corresponding to the imaging position.

### BRIEF DESCRIPTION OF DRAWINGS

Fig. 1 is a diagram illustrating an outline of a three-dimensional space sharing system according to the present disclosure.
Fig. 2 is a diagram illustrating an outline of operation phases in the three-dimensional space sharing system.
Fig. 3 is a diagram for describing transition from an instruction phase to an imaging phase.
Fig. 4 is a diagram for describing transition from the imaging phase to a confirmation phase.
Fig. 5 is a diagram illustrating variations of general shapes of imaging instruction guides.
Fig. 6 is a diagram illustrating a configuration example of the three-dimensional space sharing system.
Fig. 7 is a diagram illustrating an example of metadata of a virtual object.
Fig. 8 is a block diagram illustrating a configuration example of a VRHMD.
Fig. 9 is a block diagram illustrating a configuration example of an AR device.
Fig. 10 is a diagram for describing flows of operation of the entire three-dimensional space sharing system.
Fig. 11 is a flowchart for describing flows of operation of a server.
Fig. 12 is a flowchart for describing flows of operation of a client.
Fig. 13 is a flowchart for describing a flow of data transmission processing.
Fig. 14 is a flowchart for describing flows of specified object ID data request processing.
Fig. 15 is a flowchart for describing flows of data reception processing.
Fig. 16 is a diagram for describing flows of imaging processing executed by the AR device.
Fig. 17 is a flowchart for describing flows of virtual object display processing.
Fig. 18 is a diagram for describing a display example of an imaging instruction guide and an image object.
Fig. 19 is a flowchart for describing flows of automatic evaluation processing.
Fig. 20 is a diagram for describing a display example of the imaging instruction guide and the image object.
Fig. 21 is a flowchart for describing flows of instructing person evaluation processing.
Fig. 22 is a diagram for describing a display example of the imaging instruction guide and the image object.
Fig. 23 is a diagram illustrating another configuration example of the three-dimensional space sharing system.
Fig. 24 is a diagram illustrating an example of virtual objects indicating an imaging order.
Fig. 25 is a diagram illustrating an example of an imaging instruction guide as a planar image.
Fig. 26 is a diagram illustrating variations of planar images.
Fig. 27 is a diagram for describing a problem of an imaging instruction guide as a stereoscopic image.
Fig. 28 is a diagram for describing an imaging instruction performed by using both a stereoscopic image and a planar image.
Fig. 29 is a diagram illustrating another example of the planar image.
Fig. 30 is a flowchart for describing flows of 3D model retrieving processing.
Fig. 31 is a block diagram illustrating a configuration example of hardware of a computer.

### MODE FOR CARRYING OUT THE INVENTION

Hereinafter, a mode for carrying out the present disclosure (hereinafter referred to as an embodiment) will be described. Note that the description is given in the following order.
1. Conventional problems
2. Outline of technology according to present disclosure
3. Configuration and operation of three-dimensional space sharing system
4. Details of processing executed by AR device
5. Modifications
6. Configuration example of computer

### <1. Conventional problems>

In a case where a worker at a work site has worked under instructions from an instructing person in a remote place, it has not been easy for the worker to perform imaging as intended by the instructing person. For example, in a situation when a trouble has occurred at the work site, or the like, it has been difficult for the instructing person to instruct the worker to image a portion of the cause of the trouble at a desired imaging angle.

The factor causing this difficulty includes the fact that it is difficult for the instructing person to appropriately deliver information regarding the position and pose of a camera (for example, a smartphone) orally or by text when the worker determines the imaging angle. Furthermore, even if the worker receives an explanation orally or by text from the instructing person, the worker cannot accurately understand the content of the explanation in a case where the worker does not share common knowledge such as technical terms, names of components, and the like with the instructing person.

Therefore, in the technology according to the present disclosure, imaging at an imaging angle desired by an instructing person is enabled by an imaging angle instruction user interface (UI) using an XR technology in which virtual reality (VR) and augmented reality (AR) are combined.

### <2. Outline of technology according to present disclosure>

### (Three-dimensional space sharing system)

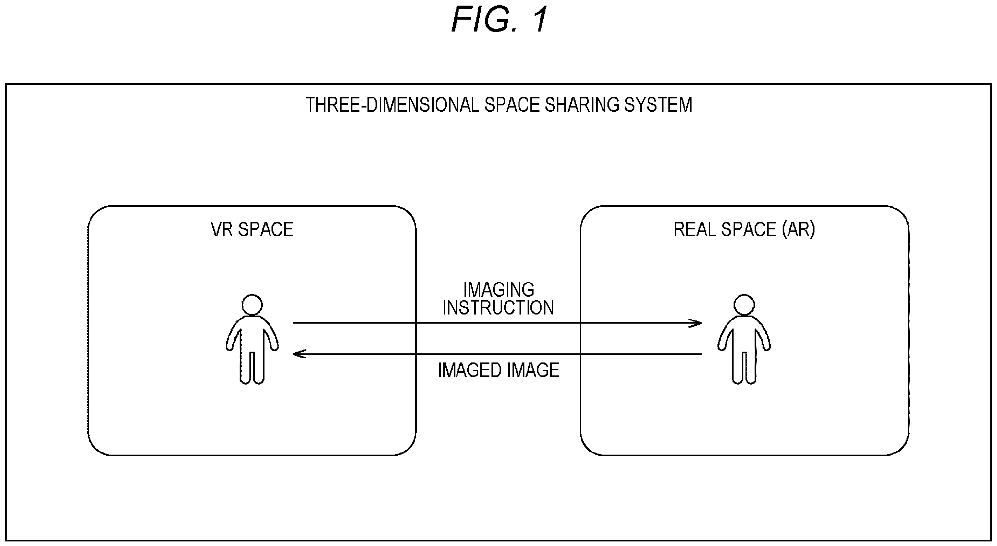

Fig. 1 is a diagram illustrating an outline of a three-dimensional space sharing system according to the present disclosure.

In the three-dimensional space sharing system illustrated in Fig. 1, a VR space and a real space are synchronized, and users in the respective spaces can understand their respective intentions through a UI presented through three-dimensional space sharing using a virtual origin. Specifically, a virtual object corresponding to an imaging instruction provided by a user (instructing person) in the VR space is presented as AR content to another user (worker) in the real space. Furthermore, a virtual object corresponding to an imaged image (still image) imaged by the user in the real space according to the imaging instruction is presented to the user in the VR space.

Therefore, the user in the real space can perform imaging at an imaging position and an imaging angle intended by the user in the VR space. Furthermore, the user in the VR space can confirm whether or not the intention has been conveyed to the user in the real space.

### (Operation phases)

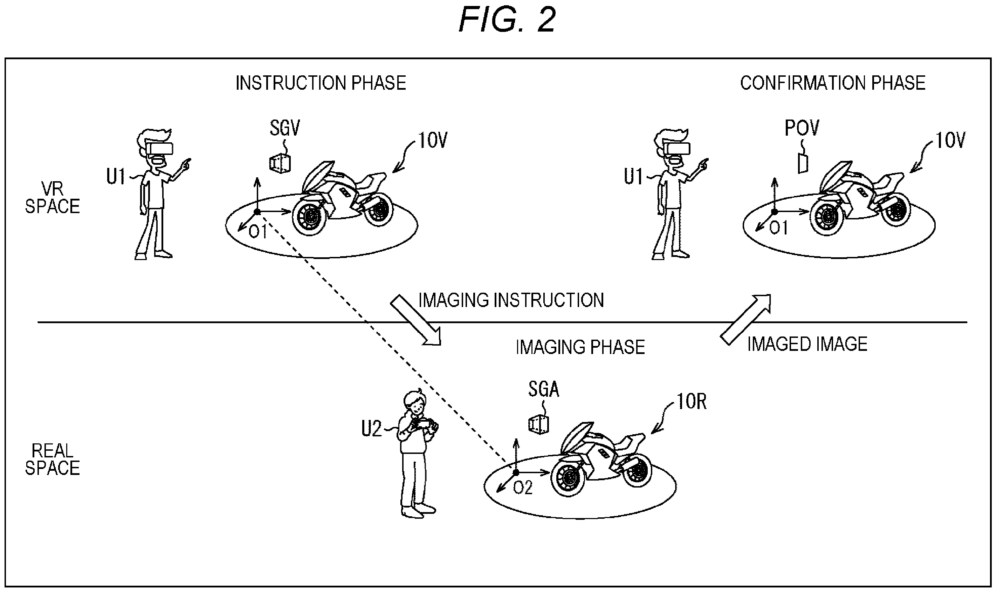

An outline of operation phases in the three-dimensional space sharing system will be described with reference to Fig. 2.

The upper part of Fig. 2 illustrates operation phases of a user U1 present in a VR space, and the lower part of Fig. 2 illustrates an operation phase of a user U2 present in a real space.

In the example of Fig. 2, the user U1 who is an instructing person in a remote place instructs the user U2 who is a worker in a work site to image an imaging target object 10R that is a real object. The user U1 wears a VR head mounted display (VRHMD), whereby the user U1 can provide an instruction on imaging while keeping in the VR space. On the real space, a virtual origin O2 corresponding to a virtual origin O1 in the VR space is set to allow the VR space and the real space to be subjected to three-dimensional space sharing.

First, in an instruction phase, the user U1 in the VR space sets an imaging instruction guide SGV, which is a stereoscopic image indicating an imaging angle from any imaging position, for a corresponding object 10V, which is a virtual object corresponding to the imaging target object 10R. Imaging instruction information indicating the position, pose, and the like of the imaging instruction guide SGV is transmitted via a server to an AR device such as a smartphone, an AR head mounted display (ARHMD), or the like carried by the user U2.

Next, in an imaging phase, the user U2 causes the AR device to display a captured image in which the imaging target object 10R is captured as a subject. On the captured image, an imaging instruction guide SGA is presented as AR content (superimposed and displayed) on the basis of the imaging instruction information from the server. The user U2 images the imaging target object 10R according to the imaging instruction guide SGA. The imaged image that has been imaged is transmitted to the VRHMD worn by the user U1 via the server together with imaging target information indicating the position and pose of the AR device and the like at the time of the imaging.

Then, in a confirmation phase, the user U1 confirms an image object POV deployed in the VR space as a virtual object, the image object POV corresponding to the imaged image imaged by the AR device. In the VR space, the image object POV is arranged at a position and pose corresponding to the position and pose of the AR device at the time of the imaging.

Details at the time of transition between the operation phases will be described.

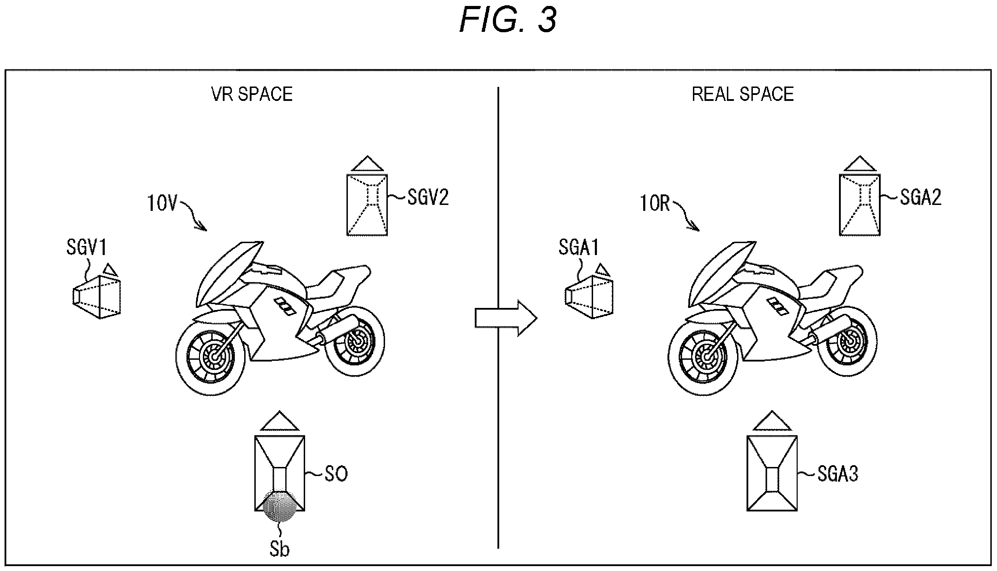

Fig. 3 is a diagram for describing transition from the instruction phase to the imaging phase.

As illustrated on the left side in Fig. 3, in the VR space, two imaging instruction guides SGV1, SGV2 are set for the corresponding object 10V. In the drawing, an imaging instruction object SO for setting the imaging instruction guide is arranged in front of the corresponding object 10V. The user U1 can set the imaging instruction guide by arranging the imaging instruction object SO at a desired position in a desired pose in the VR space and pressing an imaging instruction button Sb. The position and pose of the imaging instruction object SO determined when the imaging instruction button Sb is pressed are reflected on the imaging instruction guide presented as AR content on the real space.

That is, as illustrated on the right side in Fig. 3, on the real space, three imaging instruction guides SGA1, SGA2, SGA3 are set for the imaging target object 10R. The imaging instruction guides SGA1, SGA2, SGA3 are presented as AR content while each of the imaging instruction guides SGA1, SGA2, SGA3 keeps reflecting the position and pose of the imaging instruction object SO determined when the imaging instruction button Sb is pressed in the VR space.

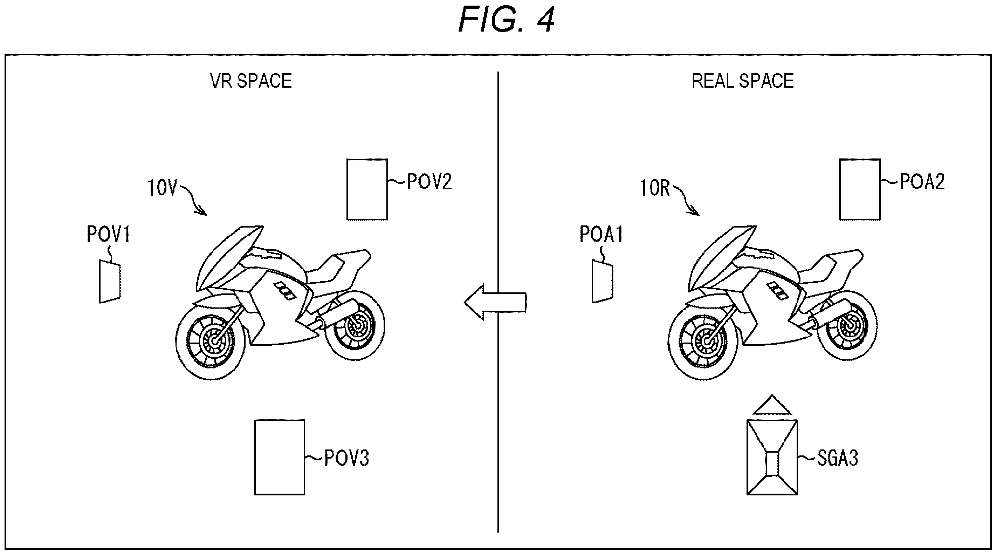

Fig. 4 is a diagram for describing transition from the imaging phase to the confirmation phase.

As illustrated on the right side in Fig. 4, on the real space, image objects POA1, POA2 corresponding to imaged images imaged according to the imaging instruction guides SGA1, SGA2 are presented as AR content. In the drawing, the imaging instruction guide SGA3 is arranged in front of the imaging target object 10R, similarly to Fig. 3. The user U2 can perform imaging at the imaging position and the imaging angle intended by the user U1 by adjusting the position and pose of the AR device (camera) according to the imaging instruction guide. The positions and poses of the AR device (camera) determined when the imaged images are imaged according to the imaging instruction guides are reflected on the image objects POA1, POA2 presented as AR content on the real space and image objects deployed in the VR space.

That is, as illustrated on the left side in Fig. 4, in the VR space, image objects POV1, POV2, POV3 corresponding to the imaged images imaged according to the imaging instruction guides SGA1, SGA2, SGA3 are deployed. The image objects POV1, POV2, POV3 are deployed while the image objects POV1, POV2, POV3 keep reflecting the positions and poses of the AR device (camera) determined when the imaged images are imaged in the real space according to the imaging instruction guides.

As described above, the user U2 can perform imaging at the imaging position and the imaging angle intended by the user U1, and the user U1 can confirm whether or not the intention has been conveyed to the user U2.

Note that the image object presented as AR content on the real space or deployed in the VR space is a rectangular planar virtual object in itself, but the image object can be recognized as an image when the texture information of the image object is replaced with image data of the imaged image.

### (General shapes of imaging instruction guides)

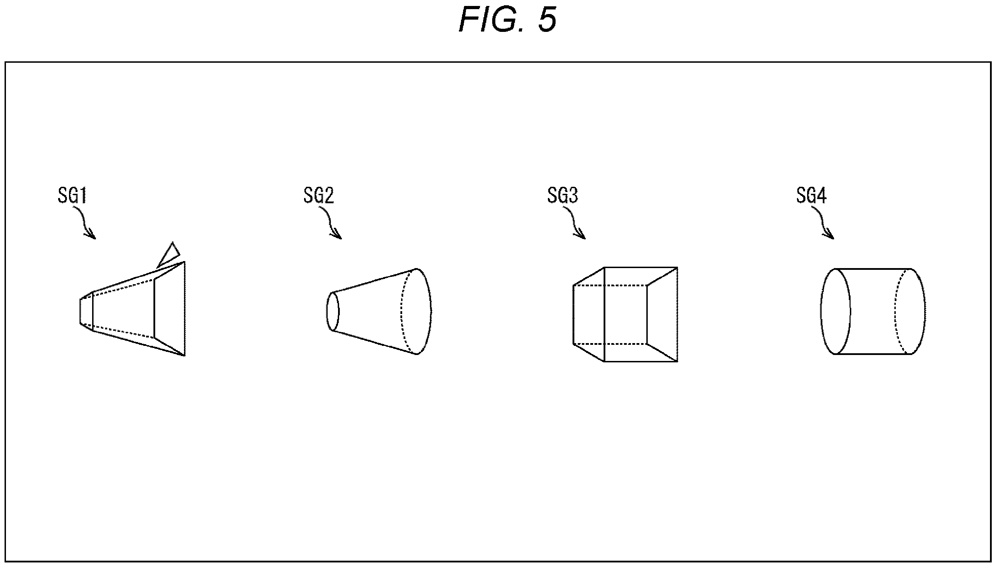

Fig. 5 is a diagram illustrating variations of general shapes of the imaging instruction guides.

As described above, the imaging instruction guide is a virtual object deployed in the VR space or presented as AR content on the real space, and is a stereoscopic image indicating an imaging angle and an imaging range from any imaging position.

Like an imaging instruction guide SG1 illustrated in Fig. 5, each of the imaging instruction guides described above has a quadrangular frustum shape with a lower base face facing in an imaging direction (right direction in Fig. 5). According to the imaging instruction guide SG1, the imaging angle is set in accordance with a direction in which the lower base face faces. Moreover, according to the imaging instruction guide SG1, the imaging range (angle of view) is set in accordance with a range viewed from the lower base face. Furthermore, the imaging range may be adjusted by making variable the size and the aspect ratio of the rectangle forming the lower base face of the imaging instruction guide SG1.

The imaging instruction guide may have a conical frustum shape with a lower base face facing in the imaging direction, like an imaging instruction guide SG2.

Furthermore, the imaging instruction guide may have a quadrangular prismatic shape with one of base faces facing in the imaging direction, like an imaging instruction guide SG3, or may have a cylindrical shape with one of base faces facing in the imaging direction, like an imaging instruction guide SG4.

### <3. Configuration and operation of three-dimensional space sharing system>

Hereinafter, a specific configuration and operation of the three-dimensional space sharing system will be described.

### (Configuration of three-dimensional space sharing system)

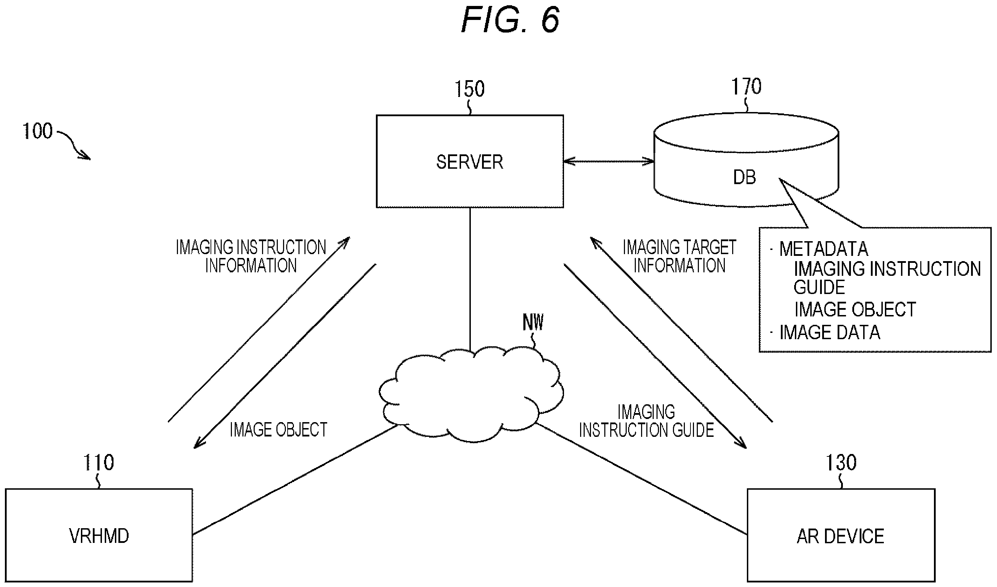

Fig. 6 is a diagram illustrating a configuration example of the three-dimensional space sharing system.

As illustrated in Fig. 6, a three-dimensional space sharing system 100 includes a VRHMD 110, an AR device 130, and a server 150. In the three-dimensional space sharing system 100, the VRHMD 110 and the AR device 130 each perform wired or wireless communication with the server 150 via the network NW such as the Internet or the like.

The VRHMD 110 is worn by, for example, an instructing person in an office, and enables provision of a VR space to the instructing person. The VRHMD 110 implements the three-dimensional space sharing using a virtual origin described above by launching an application installed in advance. The VRHMD 110 transmits, to the server 150, imaging instruction information for performing the AR presentation of an imaging instruction guide in the AR device 130, and deploys, in the VR space, an image object corresponding to metadata from the server 150.

Note that the VR device used by the instructing person in the three-dimensional space sharing system 100 is not limited to the VRHMD 110, and may include VR goggles, or may include a wide-field-of-view display or the like such as a spherical display, a semispherical display, a dome display or the like, connected to a computer.

The AR device 130 is used by, for example, a worker at a work site, and enables AR presentation to the worker. Furthermore, the AR device 130 also implements the three-dimensional space sharing using a virtual origin described above by launching an application installed in advance. The AR device 130 performs AR presentation of the imaging instruction guide corresponding to the metadata from the server 150, and transmits, to the server 150, imaging target information for deploying the image object in the VR space provided by the VRHMD 110.

The server 150 registers, in a database (DB) 170, the imaging instruction information from the VRHMD 110 and the imaging target information from the AR device 130, as metadata corresponding to a virtual object such as the imaging instruction guide or the image object. Furthermore, the server 150 registers, in the DB 170, image data of an imaged image imaged by the AR device 130, in association with the metadata of the image object.

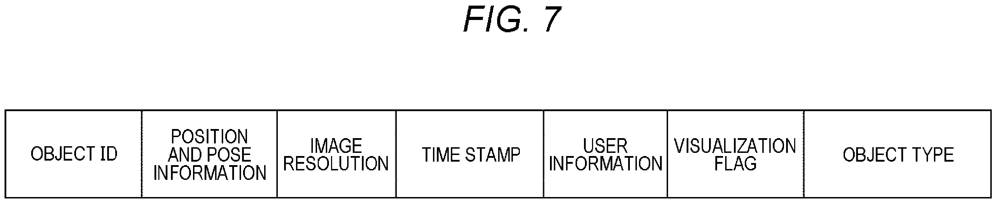

Fig. 7 is a diagram illustrating an example of metadata of a virtual object managed in the server 150.

In the metadata of the virtual object, an object ID, position and pose information, image resolution, a time stamp, user information, a visualization flag, and an object type are set.

The object ID is identification information for uniquely identifying a corresponding virtual object (an imaging instruction guide or an image object).

The position and pose information is information indicating the position and pose of the virtual object with reference to the virtual origin. As the position and pose information, for example, 6DoF information including three-dimensional position information (x, y, z) and pose information (roll, yaw, pitch) with reference to the virtual origin is set. In a case where the virtual object is an imaging instruction guide, the position and pose information indicates an imaging position and an imaging angle in a real space that is being subjected to the three-dimensional space sharing.

The image resolution is information indicating the width and height of the virtual object.

The time stamp is information indicating a date and time when an instruction to generate the virtual object has been provided. In a case where the virtual object is an imaging instruction guide, a date and time when the imaging instruction guide has been set in the VRHMD 110 is set in the time stamp. In a case where the virtual object is an image object, a date and time when an imaged image has been imaged by the AR device 130 is set in the time stamp.

The user information is information indicating a user who has provided an instruction to generate the virtual object. As the user information, for example, a name (model name) of a client (the VRHMD 110 or the AR device 130) from which the instruction to generate the virtual object has been provided, or the like is set.

The visualization flag is information indicating whether or not to display the virtual object in the client (the VRHMD 110 or the AR device 130). In a case where True is set as the visualization flag, the virtual object is displayed in the client, and in a case where False is set as the visualization flag, the virtual object is caused not to be displayed in the client.

The object type is information indicating the type of the virtual object. Specifically, the object type is information indicating whether the virtual object is an imaging instruction guide or an image object.

Next, a configuration of each of the clients (the VRHMD 110 and the AR device 130) in the three-dimensional space sharing system 100 will be described.

### (Configuration of VRHMD)

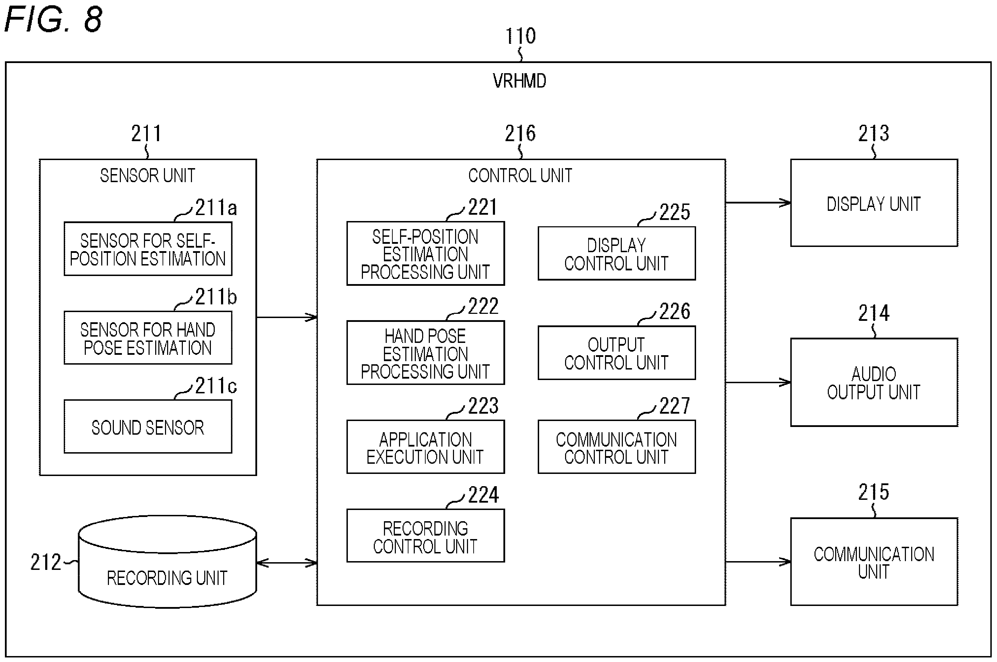

Fig. 8 is a block diagram illustrating a configuration example of the VRHMD 110.

The VRHMD 110 includes a sensor unit 211, a recording unit 212, a display unit 213, an audio output unit 214, a communication unit 215, and a control unit 216.

The sensor unit 211 senses a user (instructing person) wearing the VRHMD 110 and surroundings thereof. The sensor unit 211 includes a sensor for a self-position estimation 211a, a sensor for a hand pose estimation 211b, and a sound sensor 211c.

The sensor for a self-position estimation 211a includes an acceleration sensor, a gyro sensor, an orientation sensor, a depth sensor (distance measurement sensor), and the like. A sensing result obtained by the sensor for a self-position estimation 211a is used for an estimation of the position and pose of the head of the user.

The sensor for a hand pose estimation 211b includes a depth sensor (distance measurement sensor), an infrared camera, and the like. A sensing result obtained by the sensor for a hand pose estimation 211b is used for an estimation of the motion and pose of the hand of the user.

The sound sensor 211c includes, for example, a microphone that collects a voice uttered by the user.

The recording unit 212 includes, for example, a flash memory and the like. The recording unit 212 records a program and data necessary for providing the VR space through the VRHMD 110, a 3D model used for generating a virtual object to be deployed in the VR space, and the like.

The display unit 213 includes, for example, a non-transmissive display and the like. In the VR space presented by the display unit 213, various virtual objects are deployed under the control of the control unit 216.

The audio output unit 214 includes a speaker and the like. The audio output unit 214 outputs a sound corresponding to the VR space presented by the display unit 213 under the control of the control unit 216.

The communication unit 215 includes a network I/F and the like, and performs, for example, wireless communication based on a wireless LAN standard.

The control unit 216 includes a processor such as a central processing unit (CPU) or the like, and controls each unit of the VRHMD 110. The control unit 216 includes a self-position estimation processing unit 221, a hand pose estimation processing unit 222, an application execution unit 223, a recording control unit 224, a display control unit 225, an output control unit 226, and a communication control unit 227. Each functional block included in the control unit 216 is implemented by executing a program recorded in the recording unit 212.

The self-position estimation processing unit 221 estimates the position and pose of the head of the user on the basis of the sensing result obtained by the sensor for a self-position estimation 211a.

The hand pose estimation processing unit 222 estimates the motion and pose of the hand of the user on the basis of the sensing result obtained by the sensor for a hand pose estimation 211b.

The application execution unit 223 implements the three-dimensional space sharing using a virtual origin described above by executing a program (application program) recorded in the recording unit 212.

The recording control unit 224 controls recording of various data to the recording unit 212 and reading of various data from the recording unit 212.

The display control unit 225 controls presentation of the VR space on the display unit 213 and deployment of various virtual objects in the VR space.

The output control unit 226 controls the output of the sound from the audio output unit 214.

The communication control unit 227 controls wireless communication through the communication unit 215 to cause data to be transmitted and received to and from the server 150.

### (Configuration of AR device)

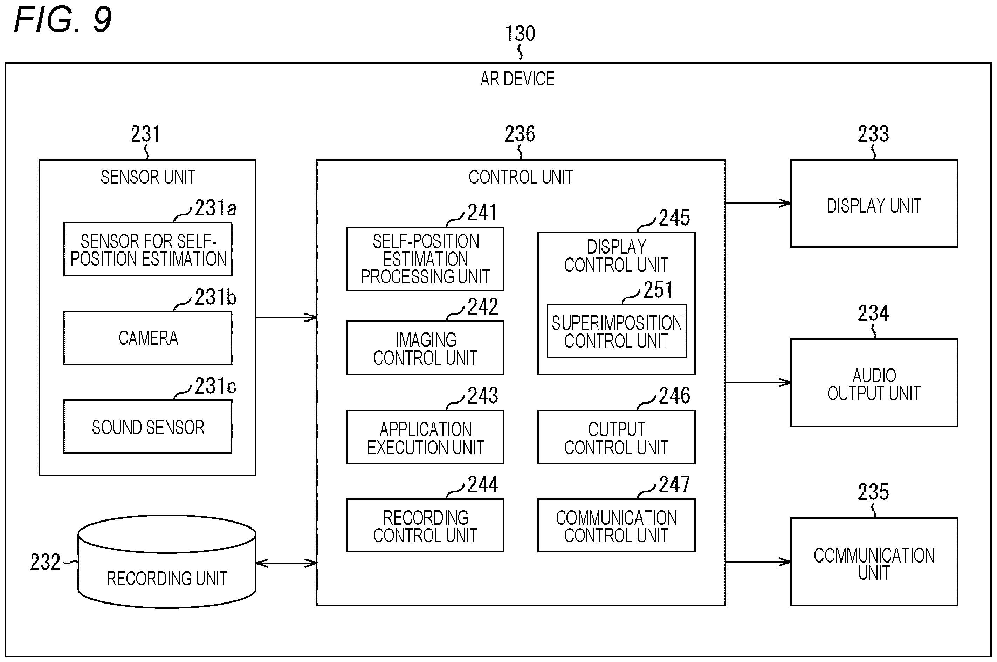

Fig. 9 is a block diagram illustrating a configuration example of the AR device 130. Fig. 9 mainly illustrates a configuration example in a case where the AR device 130 is a smartphone.

The AR device 130 includes a sensor unit 231, a recording unit 232, a display unit 233, an audio output unit 234, a communication unit 235, and a control unit 236.

Each unit included in the AR device 130 basically has a function similar to that of the corresponding one of the units included in the VRHMD 110.

The sensor unit 231 senses a user (worker) who uses the AR device 130 and surroundings thereof. The sensor unit 231 includes a sensor for a self-position estimation 231a, a camera 231b, and a sound sensor 231c.

Each of the sensor for a self-position estimation 231a and the sound sensor 231c basically has a function similar to that of the corresponding one of the sensor for a self-position estimation 211a and the sound sensor 211c included in the sensor unit 211 of the VRHMD 110, and thus the description thereof will be omitted.

The camera 231b images a real space in which an imaging target object exists, on the basis of operation of the user (worker) using the AR device 130. A captured image that is captured by the camera 231b in the real space is displayed on the display unit 233 in real time.

The control unit 236 includes a processor such as a CPU or the like, and controls each unit of the AR device 130. The control unit 236 includes a self-position estimation processing unit 241, an imaging control unit 242, an application execution unit 243, a recording control unit 244, a display control unit 245, an output control unit 246, and a communication control unit 247. Each functional block included in the control unit 236 is implemented by executing a program recorded in the recording unit 232.

Each of the functional blocks other than the imaging control unit 242 and the display control unit 245 included in the control unit 236 basically has a function similar to that of the corresponding one of the self-position estimation processing unit 221, the application execution unit 223, the recording control unit 224, the output control unit 226, and the communication control unit 227 included in the control unit 216 of the VRHMD 110, and thus the description thereof will be omitted.

The imaging control unit 242 controls the camera 231b to cause the captured image captured by the camera 231b to be acquired. Furthermore, the imaging control unit 242 controls the camera 231b to cause the camera 231b to image a still image in response to operation of an imaging button (not illustrated).

The display control unit 245 controls the display unit 233 to cause the display unit 233 to display the captured image captured by the camera 231b. The display control unit 245 includes a superimposition control unit 251.

The superimposition control unit 251 causes an imaging instruction guide to be superimposed and displayed on the captured image displayed on the display unit 233, on the basis of an imaging position and an imaging angle, for an imaging target object, set in the VR space that is being subjected to the three-dimensional space sharing with the real space. The imaging position and the imaging angle for the imaging target object are acquired as metadata (position and pose information) of an imaging instruction guide set for a corresponding object that is present in the VR space and that corresponds to the imaging target object. On the captured image, the imaging instruction guide is displayed at a position indicated by the position and pose information in a pose indicated by the position and pose information, whereby imaging at an imaging angle at the imaging position is guided.

At this time, the superimposition control unit 251 causes the size and pose of the imaging instruction guide on the captured image to change in accordance with the position and pose of the camera 231b.

With such a configuration, the imaging instruction guide virtually arranged around the imaging target object in the real space is presented to the worker. The worker can image the imaging target object at the imaging position and the imaging angle intended by the instructing person while keeping confirming the position, pose, and size of the imaging instruction guide on the captured image.

Hereinafter, operation of the three-dimensional space sharing system will be described.

### (Initial operation of entire three-dimensional space sharing system)

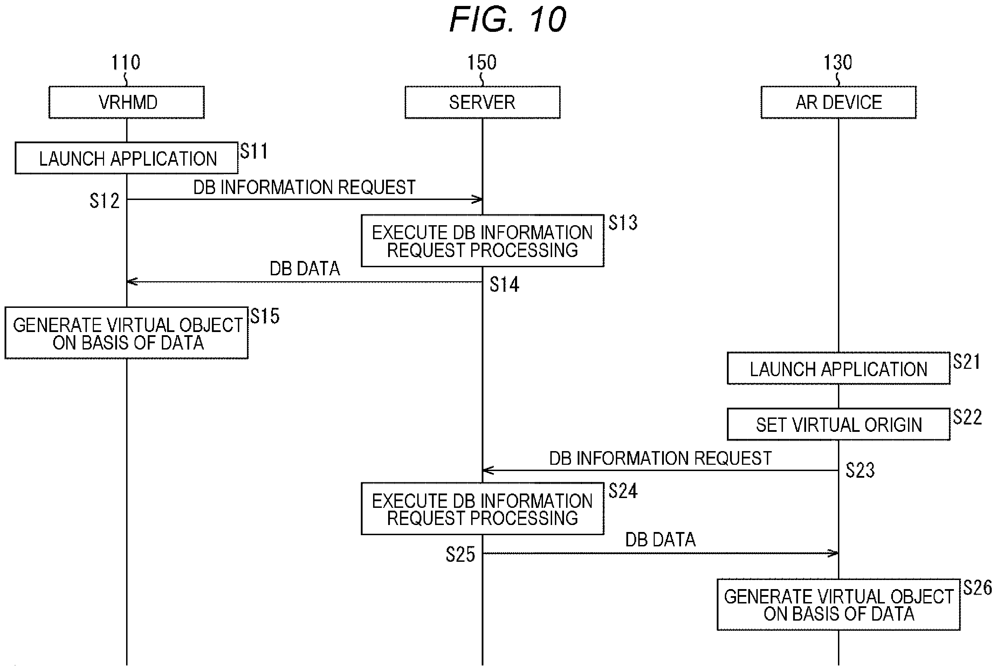

Fig. 10 is a diagram for describing flows of initial operation of the entire three-dimensional space sharing system.

Steps S11 to S15 are executed, for example, in response to an instructing person in an office operating the VRHMD 110.

When the VRHMD 110 launches an application in step S11, the VRHMD 110 transmits a DB information request to the server 150 in step S12. The DB information request is information for requesting data (DB data) for generating a virtual object to be deployed in the VR space, the data being managed in the DB 170.

In step S13, the server 150 executes DB information request processing of retrieving, from the DB 170, DB data corresponding to the DB information request, and in step S14, the server 150 transmits the retrieved DB data to the VRHMD 110.

In step S15, the VRHMD 110 generates a virtual object to be deployed in the VR space on the basis of the DB data from the server 150.

Meanwhile, steps S21 to S26 are executed, for example, in response to a worker at a work site operating the AR device 130.

When the AR device 130 launches an application in step S21, the AR device 130 sets a virtual origin in step S22. The virtual origin may be set on the basis of a marker arranged in the real space, or may be set by detecting a feature point of an imaging target object and by calibrating the feature point with a feature point of a corresponding object in the VR space. After the virtual origin is set, the AR device 130 transmits a DB information request to the server 150 in step S23. The DB information request here is information for requesting DB data for generating a virtual object to be presented as AR content on the real space, the DB data being managed in the DB 170.

In step S24, the server 150 executes DB information request processing of retrieving, from the DB 170, DB data corresponding to the DB information request, and in step S25, the server 150 transmits the retrieved DB data to the AR device 130.

In step S26, the AR device 130 generates a virtual object to be presented as AR content on the real space on the basis of the DB data from the server 150.

As described above, in the AR device 130, the three-dimensional space sharing between the VR space and the real space can be implemented by setting the virtual origin after the application is launched.

### (Operation of server)

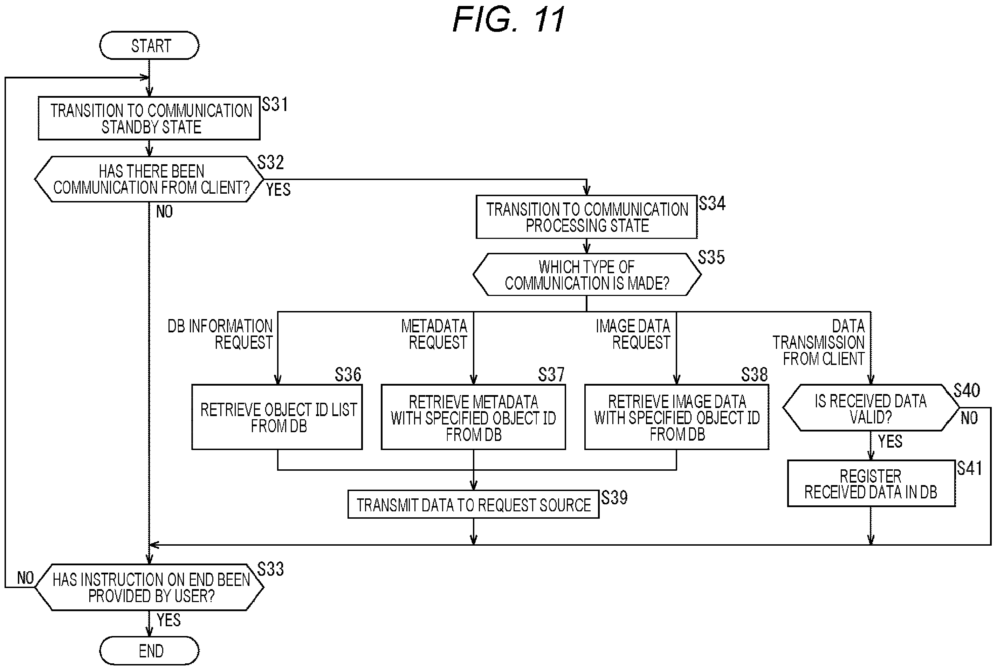

Next, the flows of communication processing with the client (the VRHMD 110 or the AR device 130) executed by the server 150 will be described with reference to the flowchart of Fig. 11. In the three-dimensional space sharing system 100, similar communication processing is basically executed regardless of whether the communication target of the server 150 is the VRHMD 110 or the AR device 130.

In step S31, the server 150 transitions to a communication standby state.

In step S32, the server 150 determines whether or not there has been communication (communication request) from the client. In a case where it is determined that there has been no communication from the client, the flow proceeds to step S33.

In step S33, the server 150 determines whether or not an instruction to cause the communication to end has been provided by a user in the communication target client. In a case where it is determined that the instruction to cause the communication to end has not been provided, the flow returns to step S31, and the subsequent series of processing is repeated.

On the other hand, in a case where it is determined in step S33 that the instruction to cause the communication to end has been provided, the communication processing with the client ends.

Now, in a case where it is determined in step S32 that there has been communication from the client, the flow proceeds to step S34.

In step S34, the server 150 transitions to a communication processing state.

In step S35, the server 150 determines which type of communication the communication with the client is. There are four types of communication with the client, and these four types are a DB information request, a metadata request, an image data request, and data transmission from the client.

In a case where the communication with the client is the DB information request, the flow proceeds to step S36, and the server 150 retrieves an object ID list from the DB 170. The object ID list is a list of object IDs of all virtual objects deployed in the VR space and the real space (hereinafter, also collectively referred to as a virtual space) that are being subjected to the three-dimensional space sharing.

In a case where the communication from the client is the metadata request, the flow proceeds to step S37, and the server 150 retrieves metadata with a specified object ID from the DB 170. The metadata request includes an object ID of a virtual object specified in the client (hereinafter, also referred to as a specified object ID), and metadata in which the specified object ID is set is retrieved by the server 150.

In a case where the communication from the client is the image data request, the flow proceeds to step S38, and the server 150 retrieves image data with a specified object ID from the DB 170. The image data request includes, as the specified object ID, an object ID of an image object specified in the client, and image data associated with the image object is retrieved by the server 150.

When each data is retrieved from the DB 170 in a corresponding one of steps S36, S37, and S38, the flow proceeds to step S39, and the server 150 transmits the retrieved data to the request source client. Thereafter, the flow proceeds to step S33.

Furthermore, in a case where the communication from the client is the data transmission, the flow proceeds to step S40, and the server 150 determines whether or not the data received from the client is valid. The received data includes the metadata including the imaging instruction information or the imaging target information, and image data, described above. In a case where it is determined that the received data is valid, the flow proceeds to step S41.

In step S41, the server 150 registers the received data in the DB 170. Specifically, the server 150 registers, in the DB 170, metadata of an imaging instruction guide or an image object, and image data associated with the image object. Thereafter, the flow proceeds to step S33.

On the other hand, in a case where it is determined in step S40 that the received data is not valid, step S41 is skipped, and the flow proceeds to step S33.

### (Operation of client)

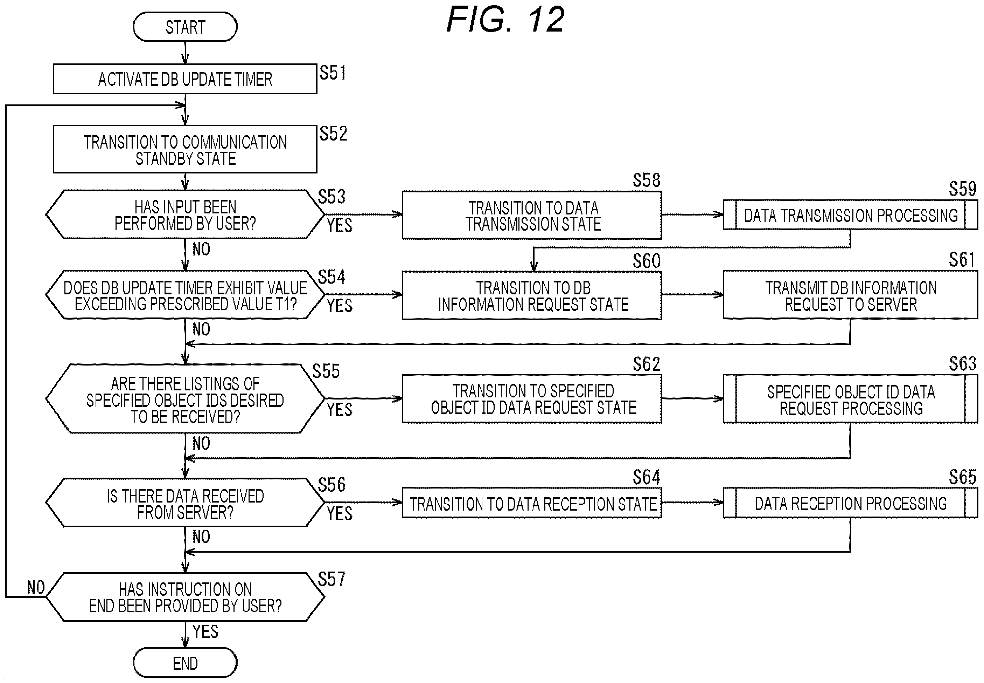

Next, the flows of communication processing with the server 150 executed by the client (the VRHMD 110 or the AR device 130) will be described with reference to the flowchart of Fig. 12. In the three-dimensional space sharing system 100, both the VRHMD 110 and the AR device 130 basically execute similar communication processing.

In step S51, the client activates a DB update timer. The DB update timer is a timer that measures time used for periodically transmitting, to the server 150, the DB information request for requesting DB data for generating a virtual object. That is, with the DB update timer, update frequency of the virtual object to be deployed on the virtual space is determined.

In step S52, the client transitions to a communication standby state.

In step S53, the client determines whether or not input has been performed by a user. The input performed by the user includes, for example, pressing of the imaging instruction button Sb or a physical button (not illustrated) in the VRHMD 110, or operation of the imaging button in the AR device 130. In a case where it is determined that the input has not been performed by the user, the flow proceeds to step S54.

In step S54, the client determines whether or not the DB update timer exhibits a value exceeding a prescribed value T1. The prescribed value T1 indicates a time interval of the update frequency of the virtual object to be deployed on the virtual space. In a case where it is determined that the DB update timer does not exhibit a value exceeding the prescribed value T1, that is, in a case where it is not the timing to transmit the DB information request to the server 150, the flow proceeds to step S55.

In step S55, the client determines whether or not there are listings of specified object IDs desired to be received. The listings of the specified object IDs desired to be received are listings of object IDs of virtual objects that are not deployed on the virtual space of the client at that time point, in an object ID list from the server 150. In a case where it is determined that there are no listings of specified object IDs desired to be received, the flow proceeds to step S56.

In step S56, the client determines whether or not there is data received from the server 150. The data received from the server 150 is, for example, an object ID list, metadata of a virtual object, or image data. In a case where it is determined that there is no data received from the server 150, the flow proceeds to step S57.

In step S57, the client determines whether or not an instruction to cause the communication to end has been provided by the user. In a case where it is determined that the instruction to cause the communication to end has not been provided, the flow returns to step S52, and the subsequent series of processing is repeated.

On the other hand, in a case where it is determined in step S57 that the instruction to cause the communication to end has been provided, the communication processing with the server 150 ends.

Now, in a case where it is determined in step S53 that the input has been performed by the user, the flow proceeds to step S58.

In step S58, the client transitions to a data transmission state.

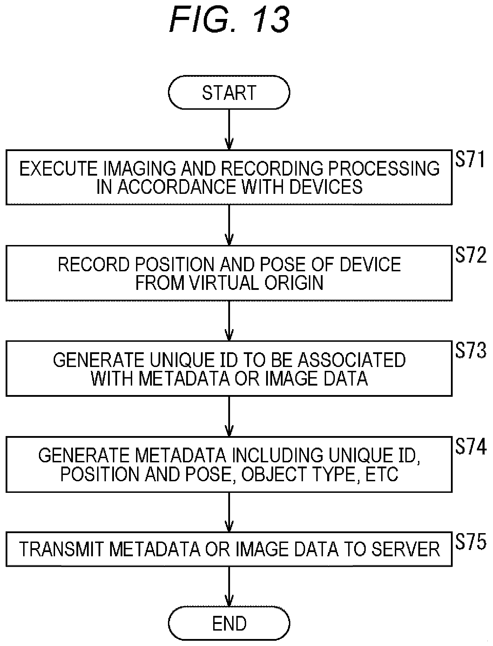

Then, in step S59, the client executes data transmission processing. In the data transmission processing, from the client to the server 150, for example, transmission of metadata of an imaging instruction guide or an image object is performed, or transmission of image data corresponding to the image object is performed. Details of the data transmission processing will be described later with reference to the flowchart of Fig. 13. When the data transmission processing ends, the flow proceeds to step S60.

Furthermore, also in a case where it is determined in step S54 that the DB update timer exhibits a value exceeding the prescribed value T1, that is, in a case where it is timing to transmit the DB information request to the server 150, the flow proceeds to step S60.

In step S60, the client transitions to a DB information request state.

Then, in step S61, the client transmits the DB information request to the server 150. Thereafter, the flow proceeds to step S55.

Now, in a case where it is determined in step S55 that there are the listings of specified object IDs desired to be received, the flow proceeds to step S62.

In step S62, the client transitions to a specified object ID data request state.

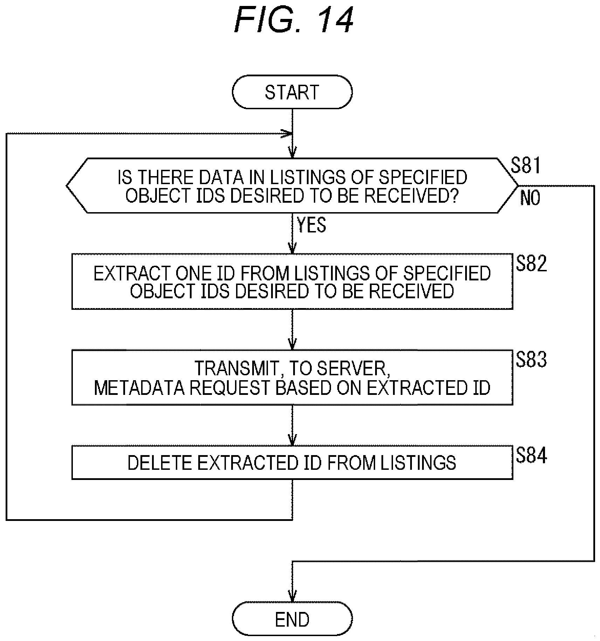

Then, in step S63, the client executes specified object ID data request processing. Details of the specified object ID data request processing will be described later with reference to the flowchart of Fig. 14. When the specified object ID data request processing ends, the flow proceeds to step S56.

Now, in a case where it is determined in step S56 that there is data received from the server 150, the flow proceeds to step S64.

In step S64, the client transitions to a data reception state.

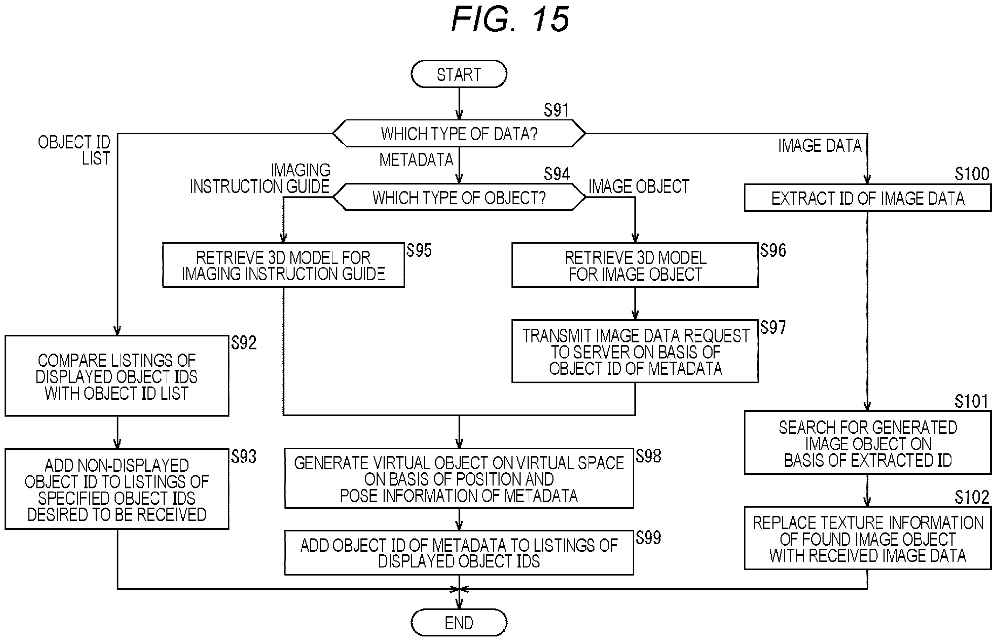

Then, in step S65, the client executes data reception processing. In the data reception processing, an object ID list, metadata of a virtual object, and image data are received from the server 150. Details of the data reception processing will be described later with reference to the flowchart of Fig. 15. When the data reception processing ends, the flow proceeds to step S57.

### (Flow of data transmission processing)

Here, the flow of the data transmission processing executed in step S59 of Fig. 12 will be described with reference to the flowchart of Fig. 13. The processing of Fig. 13 is executed in response to the user pressing the imaging instruction button Sb or the physical button of a controller (not illustrated) in the VRHMD 110, or operating the imaging button in the AR device 130, as described above.

In step S71, the client executes imaging and recording processing in accordance with the devices.

Specifically, in a case where the client is the VRHMD 110, a screenshot of the VR space is recorded. In a case where the client is a smartphone as one type of the AR device 130, after a virtual object superimposed and displayed on a captured image is hidden, a screenshot of the captured image is recorded. Thereafter, the hidden virtual object is displayed again on the captured image. Furthermore, in a case where the client is an ARHMD as one type of the AR device 130, an image is imaged by a camera built in the ARHMD to be recorded.

When the image of the VR space or the real space is recorded as described above, the flow proceeds to step S72.

In step S72, the client records a position and pose (a relative position and relative pose) of the device from the virtual origin.

For example, in a case where the client is the VRHMD 110, the center position and the pose of the imaging instruction object SO arranged on the VR space by the user (instructing person) are recorded. Furthermore, in the VR space, a virtual object corresponding to the hand shape of the user may be presented instead of the imaging instruction object SO. In this case, the center position and the pose of the virtual object corresponding to the hand shape are recorded. In a case where the client is the AR device 130, the center position and the pose of the AR device 130 used by the user (worker) are recorded.

In step S73, the client generates a unique ID to be associated with metadata or image data to be transmitted to the server 150. The unique ID generated here is the object ID described with reference to Fig. 7.

In step S74, the client generates metadata including the unique ID (object ID), the position and pose of the device, the object type, and the like.

Then, in step S75, the client transmits the metadata or the image data to the server 150. Specifically, in a case where the client is the VRHMD 110, the metadata of the imaging instruction guide is transmitted to the server 150. In a case where the client is the AR device 130, the metadata of the image object, and the image data are transmitted to the server 150.

As described above, the data transmission processing is executed.

### (Flows of specified object ID data request processing)

Next, the flows of the specified object ID data request processing executed in step S63 of Fig. 12 will be described with reference to the flowchart of Fig. 14.

In step S81, the client determines whether or not there is data in the listings of specified object IDs desired to be received. In a case where it is determined that there is data in the listings of specified object IDs desired to be received, the flow proceeds to step S82.

In step S82, the client extracts one ID (object ID) from the listings of specified object IDs desired to be received.

In step S83, the client transmits, to the server 150, a metadata request based on the extracted ID.

Then, in step S84, the client deletes the extracted ID from the listings of specified object IDs desired to be received. Thereafter, the flow returns to step S81, and the metadata request is repeatedly transmitted until all the data in the listings of specified object IDs desired to be received is deleted.

In response to the metadata request being transmitted as described above, metadata in which the specified object ID desired to be received is set is transmitted from the server 150.

### (Flows of data reception processing)

Then, the flows of the data reception processing executed in step S65 of Fig. 12 will be described with reference to the flowchart of Fig. 15. As described above, the processing of Fig. 15 is executed in a case where there is some data received from the server 150.

In step S91, the client determines which type of data the data received from the server 150 is. As described above, there are three types of the received data, and these three types are an object ID list, metadata, and image data.

In a case where the received data is the object ID list, the flow proceeds to step S92, and the client compares listings of displayed object IDs with the received object ID list. The listings of displayed object IDs are listings of object IDs of virtual objects having already been deployed on the virtual space of the client.

In step S93, the client adds a non-displayed object ID to the listings of specified object IDs desired to be received. The non-displayed object ID is an object ID that is not the displayed object ID in the received object ID list.

In this manner, in the client, the listings of specified object IDs desired to be received are updated.

In a case where the received data is metadata, the flow proceeds to step S94, and the client determines which type of object a virtual object corresponding to the received metadata is. As described above, there are two types of virtual objects, and these two types are an imaging instruction guide and image data.

In a case where the virtual object corresponding to the received metadata is an imaging instruction guide, the flow proceeds to step S95, and the client retrieves a 3D model for the imaging instruction guide from the recording unit 212 or the recording unit 232.

On the other hand, in a case where the virtual object corresponding to the received metadata is an image object, the flow proceeds to step S96, and the client retrieves a 3D model for the image object from the recording unit 212 or the recording unit 232.

Next, in step S97, the client transmits an image data request to the server 150 on the basis of the object ID of the received metadata.

After step S95 or step S97, the flow proceeds to step S98, and the client generates the virtual object (the imaging instruction guide or the image object) on the virtual space using the retrieved 3D model on the basis of the position and pose information of the received metadata.

In step S99, the client adds the object ID of the received metadata to the listings of displayed object IDs.

In this manner, in the client, the virtual object such as the imaging instruction guide or the image object is deployed.

Furthermore, in a case where the received data is the image data, the flow proceeds to step S100, and the client extracts an ID (object ID) set in the received image data.

In step S101, the client searches for a generated image object (image object deployed in the client) on the basis of the extracted ID.

In step S102, the client replaces the texture information of the found image object with the received image data.

In this manner, in the client, a high-definition image is displayed as the image object.

With such processing described above, in the three-dimensional space sharing system 100, presentation of a UI through three-dimensional space sharing using a virtual origin is enabled.

### <4. Details of processing executed by AR device>

Here, details of processing executed by the AR device 130 used by a worker who is required to perform imaging as intended by an instructing person will be described.

### (Flows of imaging processing)

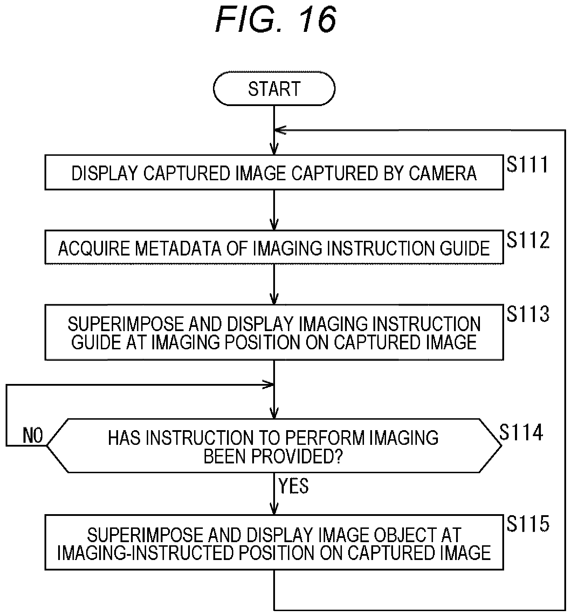

First, the flows of imaging processing executed by the AR device 130 (Fig. 9) will be described with reference to the flowchart of Fig. 16. The processing of Fig. 16 can be implemented while the communication processing described with reference to the flowchart of Fig. 12 is kept executed.

In step S111, the display control unit 245 causes the display unit 233 to display a captured image captured by the camera 231b.

In step S112, the communication control unit 247 causes metadata of an imaging instruction guide set by the VRHMD 110 in the VR space to be acquired (received) from the server 150 via the network NW.

In step S113, the superimposition control unit 251 causes the imaging instruction guide to be superimposed and displayed at an imaging position on the captured image on the basis of the metadata of the imaging instruction guide acquired from the server 150. Here, on the basis of a position and pose indicated by position and pose information included in the metadata of the imaging instruction guide, the imaging instruction guide in a pose indicating an imaging angle is displayed at a position indicating the imaging position on the captured image.

In step S114, the imaging control unit 242 determines whether or not an instruction to perform imaging has been provided according to whether or not the imaging button included in the AR device 130 has been operated. Step S114 is repeated until the instruction to perform imaging is provided. When the instruction to perform imaging is provided, the imaged still image is transmitted to the server 150 as image data, together with the metadata of the image object, and the flow proceeds to step S115.

In step S115, the superimposition control unit 251 causes the image object to be superimposed and displayed at the imaging-instructed position on the captured image on the basis of the metadata of the image object (still image). Here, the image object at the position and in the pose indicated by the position and pose information included in the metadata of the image object is displayed. The image object is displayed after the texture information of the image object is replaced with the image data transmitted, as a still image, to the server 150.

Furthermore, by allowing the image object to be transmitted to the AR device 130 by the communication control unit 247 via the server 150 (network NW), the image object is similarly displayed in the VR space (VRHMD 110) that is being subjected to the three-dimensional space sharing using a virtual origin.

According to the above processing, the worker at the work site can enable imaging as intended by the instructing person by referring to the imaging instruction guide presented as AR content, even if the imaging is imaging at an imaging angle that is desired by the instructing person but that is difficult to understand only through an instruction made by words.

Furthermore, the instructing person in a remote place can easily understand the worker's intention such as an imaging position, an imaging angle, and the like obtained through imaging by the worker, by obtaining a real-time image of an imaging target, not obtainable through an instruction target of a 3D model prepared in advance. Furthermore, the instructing person can provide an instruction on an imaging angle for a newly desired image while keeping broadly viewing a 3D model prepared in advance, and thus work efficiency can be improved.

Hereinafter, an example will be described in which either an imaging instruction guide or an image object is hidden in accordance with a relative positional relationship between the imaging instruction guide and the image object.

### (UI presentation using time stamp)

In accordance with the relative positional relationship between the virtual objects (the imaging instruction guide and the image object), time stamps included in respective pieces of metadata of the imaging instruction guide and the image object are used, whereby it is possible to enable more suitable presentation of a UI.

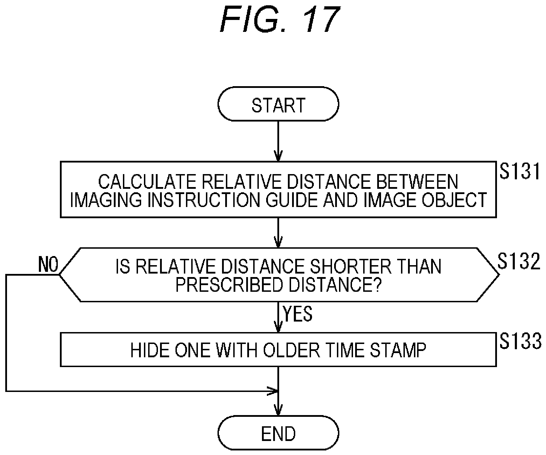

Here, the flows of virtual object display processing using time stamps included in metadata will be described with reference to the flowchart of Fig. 17.

In step S131, the superimposition control unit 251 calculates a relative distance between an imaging instruction guide and an image object superimposed and displayed on a captured image (deployed on a virtual space). The relative distance includes, for example, a distance between respective barycentric coordinates of the virtual objects, and the like.

In step S132, the superimposition control unit 251 determines whether or not the calculated relative distance is shorter than a prescribed distance. In a case where it is determined that the relative distance is shorter than the prescribed distance, the flow proceeds to step S133.

In step S133, the superimposition control unit 251 causes one with an older time stamp out of the imaging instruction guide and the image object to be hidden on the basis of the time stamps included in the respective pieces of metadata of the imaging instruction guide and the image object. That is, the one with an earlier generated time, out of the imaging instruction guide and the image object, is hidden, and only the one with a later generated time, out of the imaging instruction guide and the image object, is displayed.

Note that, in a case where it is determined in step S132 that the relative distance is not shorter than the prescribed distance, that is, in a case where the imaging instruction guide and the image object are separated from each other by a distance longer than the prescribed distance, step S133 is skipped.

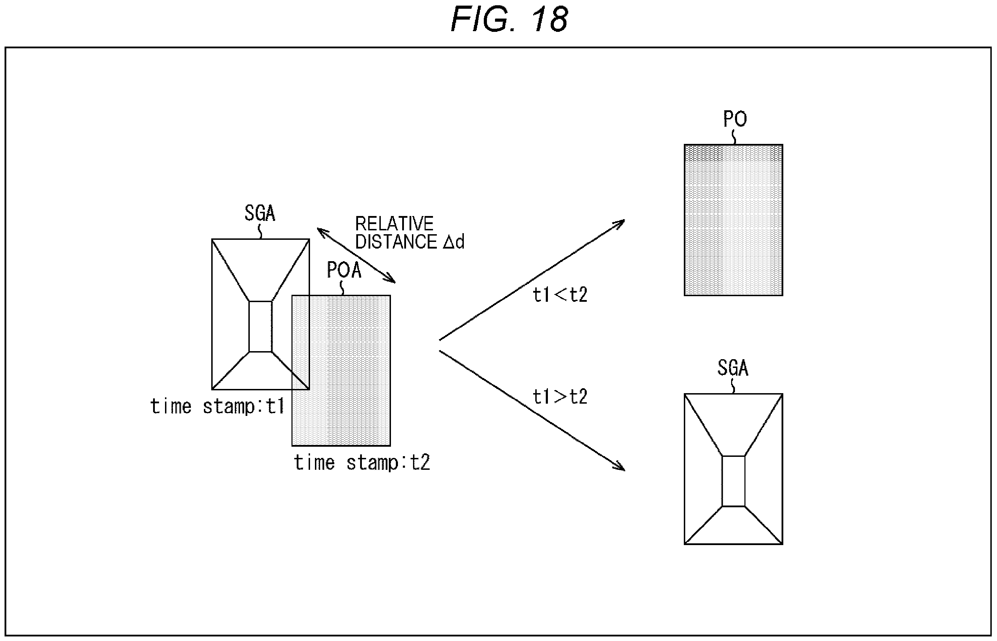

For example, as illustrated in Fig. 18, it is determined whether or not a relative distance Δd between the imaging instruction guide SGA and the image object POA is shorter than a distance D1. The distance D1 is such a distance that virtual objects overlap each other to hinder visual recognition, and in Fig. 18, the relationship of Δd < D1 is assumed. Furthermore, it is assumed that the time stamp of the imaging instruction guide SGA is t1, and the time stamp of the image object POA is t2.

Here, in a case where the relationship of t1 < t2 is established, that is, in a case where the time stamp of the imaging instruction guide SGA is older than the time stamp of the image object POA, only the image object POA with newer time stamp is displayed. At this time, the visualization flag included in the metadata of the imaging instruction guide SGA is updated from True to False.

On the other hand, in a case where the relationship of t1 > t2 is established, that is, in a case where the time stamp of the image object POA is older than the time stamp of the imaging instruction guide SGA, only the imaging instruction guide SGA with newer time stamp is displayed. At this time, the visualization flag included in the metadata of the image object POA is updated from True to False.

Note that the processing described above can be similarly executed in the VRHMD 110 in addition to the AR device 130.

Furthermore, the processing described above can be applied not only to display processing for the imaging instruction guide and the image object, but also to display processing for between the imaging instruction guides or display processing for between the image objects.

According to the above processing, both the worker and the instructing person can always confirm the latest imaging instruction guide or image object, and can easily confirm the progress of the work. Furthermore, in particular, the instructing person can easily confirm part of an imaging target object in which information (image) is frequently updated, whereby it is possible to identify part with a higher confirmation frequency to improve the work process.

### (Evaluation on imaging result)

In accordance with the relative positional relationship between the imaging instruction guide and the image object, it is possible to evaluate an imaging result such as an evaluation as to whether or not appropriate imaging has been performed by a worker, and the like.

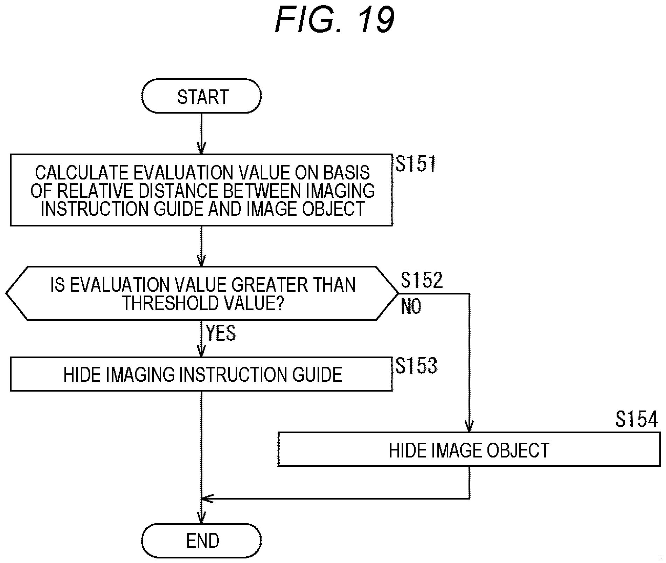

Here, the flows of automatic evaluation processing on an imaging result in the AR device 130 will be described with reference to the flowchart of Fig. 19.

In step S151, the superimposition control unit 251 calculates an evaluation value on the basis of a relative distance between an imaging instruction guide and an image object superimposed and displayed on a captured image (deployed on a virtual space).

In step S152, the superimposition control unit 251 determines whether or not the calculated evaluation value is greater than a preset threshold value.

In a case where it is determined in step S152 that the evaluation value is greater than the threshold value, the flow proceeds to step S153, and the superimposition control unit 251 causes the imaging instruction guide to be hidden.

On the other hand, in a case where it is determined in step S152 that the evaluation value is not greater (is smaller) than the threshold value, the flow proceeds to step S154, and the superimposition control unit 251 causes the image object to be hidden.

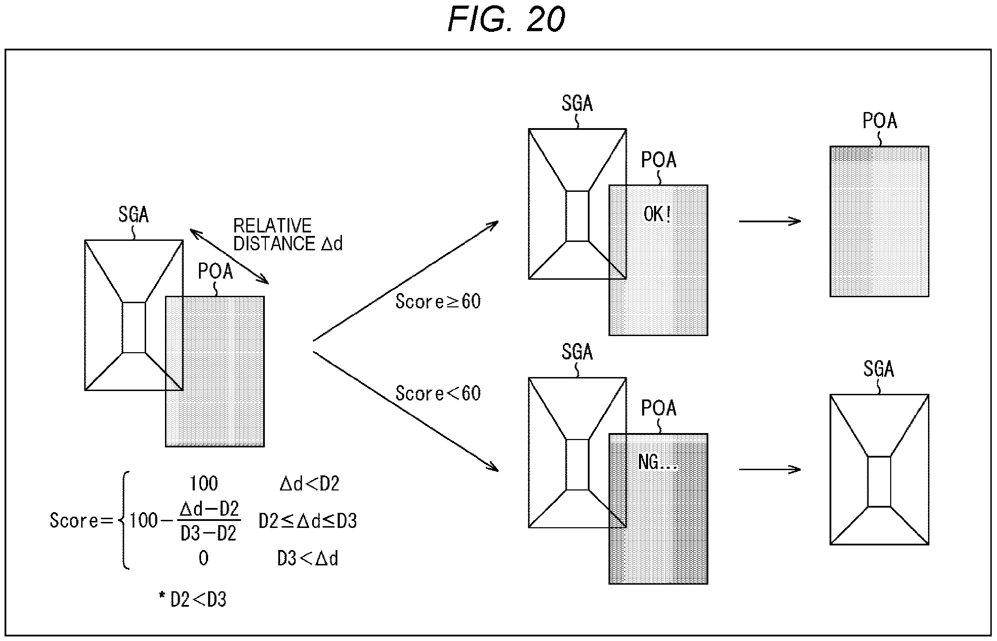

For example, as illustrated in Fig. 20, an evaluation value Score is calculated on the basis of the relative distance Δd between the imaging instruction guide SGA and the image object POA, and threshold values D2, D3 for distance with a relationship of D2 < D3.

In a case where the relationship of Δd < D2 is established, the evaluation value Score is calculated to be 100. In a case where the relationship of D2 ≤ Δd ≤ D3 is established, the evaluation value Score is calculated as 100 - {(Δd - D2)/(D3 - D2)}. In a case where the relationship of D3 < Δd is established, the evaluation value Score is calculated to be 0.

Then, in a case where the evaluation value Score is, for example, equal to or greater than a threshold value of 60, a message such as "OK!" or the like is displayed on the image object POA as the imaging result, and the imaging instruction guide SGA is hidden. At this time, the visualization flag included in the metadata of the imaging instruction guide SGA is updated from True to False.

On the other hand, in a case where the evaluation value Score is, for example, smaller than the threshold value of 60, a message such as "NG..." or the like is displayed on the image object POA as the imaging result, and the image object POA is hidden. At this time, the visualization flag included in the metadata of the image object POA is updated from True to False.

In the processing described above, the evaluation value is calculated on the basis of the relative distance Δd between the imaging instruction guide and the image object. Alternatively, the evaluation value may be calculated on the basis of a relative pose Δθ between the imaging instruction guide and the image object, or the evaluation value may be calculated on the basis of the relative distance Δd and the relative pose Δθ between the imaging instruction guide and the image object.

In the above description, the imaging result is automatically evaluated in the AR device 130. However, alternatively, an evaluation on an imaging result made by the instructing person may be fed back to the AR device 130.

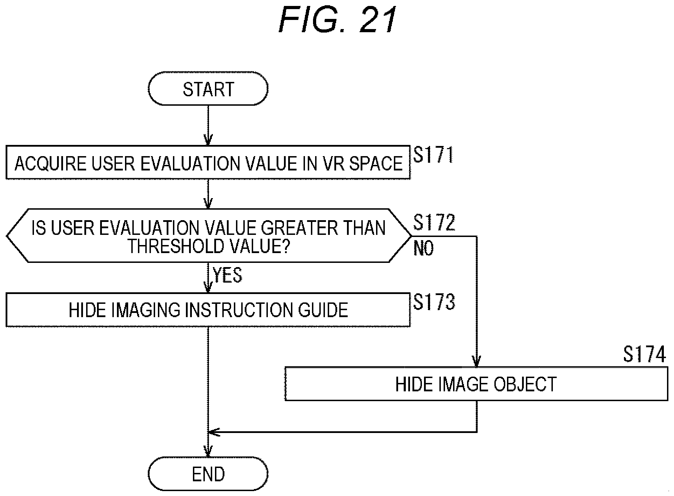

Here, the flows of instructing person evaluation processing on an imaging result will be described with reference to the flowchart of Fig. 21. The processing of Fig. 21 is executed by the instructing person evaluating an imaging result (image object) presented in the VR space (VRHMD 110). An evaluation value (user evaluation value) in the VR space is transmitted from the VRHMD 110 to the AR device 130 via the server 150.

In step S171, the communication control unit 247 causes the user evaluation value in the VR space from the VRHMD 110 to be acquired.

In step S172, the superimposition control unit 251 determines whether or not the acquired user evaluation value is greater than a preset threshold value.

In a case where it is determined in step S172 that the user evaluation value is greater than the threshold value, the flow proceeds to step S173, and the superimposition control unit 251 causes the imaging instruction guide to be hidden.

On the other hand, in a case where it is determined in step S172 that the user evaluation value is not greater (is smaller) than the threshold value, the flow proceeds to step S174, and the superimposition control unit 251 causes the image object to be hidden.

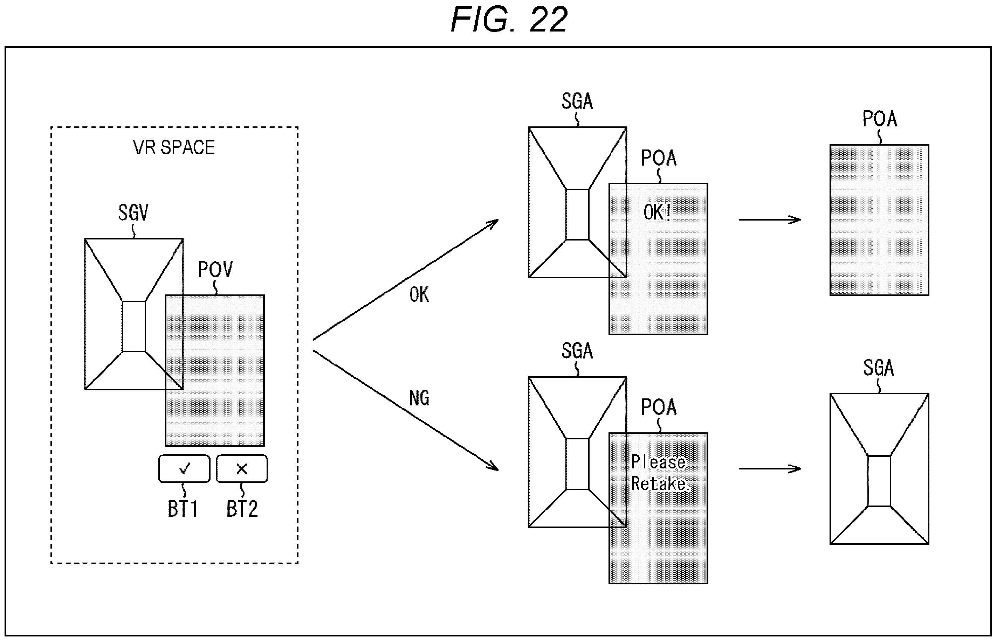

For example, as illustrated in Fig. 22, the instructing person confirms the imaging instruction guide SGV and the image object POV presented in the VR space (VRHMD 110), whereby the instructing person presses any one of buttons BT1, BT2 for evaluating the imaging result (image object POV). The button BT1 is a UI operated to set the imaging result to OK, and the button BT2 is a UI operated to set the imaging result to NG.

Then, in a case where in the VR space (VRHMD 110), the button BT1 is pressed by the instructing person, a message "OK!" is displayed on the image object POA as the imaging result and the imaging instruction guide SGA is hidden in the AR device 130. At this time, the visualization flag included in the metadata of the imaging instruction guide SGA is updated from True to False.

On the other hand, in a case where in the VR space (VRHMD 110), the button BT2 is pressed by the instructing person, a message "Please Retake." is displayed on the image object POA as the imaging result and the image object POA is hidden in the AR device 130. At this time, the visualization flag included in the metadata of the image object POA is updated from True to False.

According to the above processing, in a case where the worker performs imaging according to the imaging instruction guide, the fact whether or not the obtained image is imaged as intended by the instructing person is fed back to the worker in real time. As a result, imaging at more accurate imaging position and imaging angle is enabled.

### <5. Modifications>

Hereinafter, modifications of the embodiment described above will be described.

### (Cooperation between smartphone and ARHMD)

Instead of setting the AR device used by a worker to either one of the smartphone or the ARHMD, both of them may be caused to cooperate with each other.

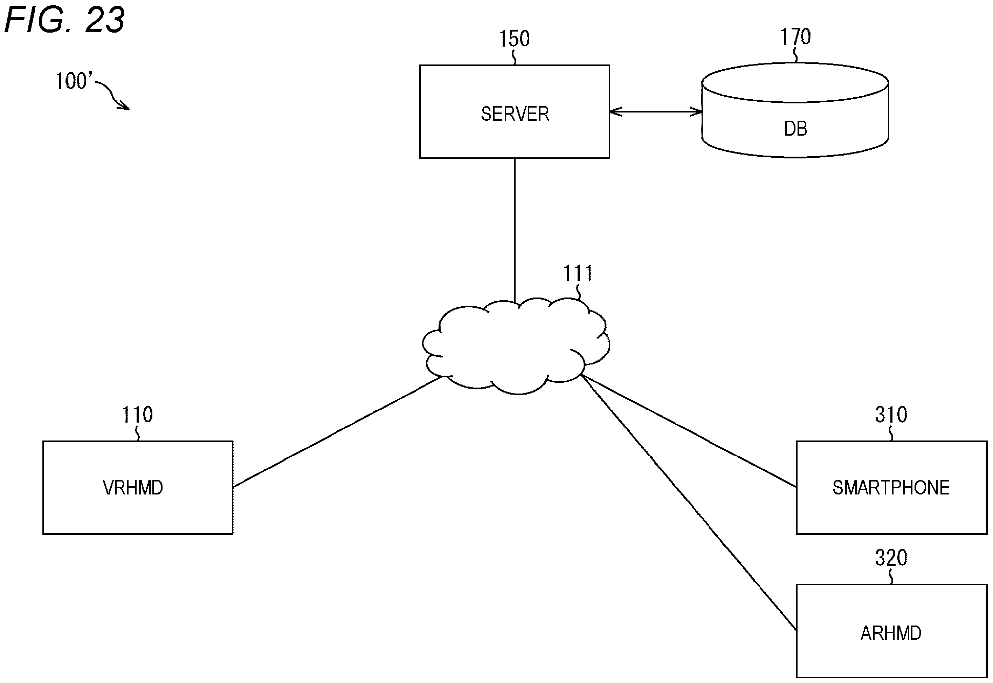

Fig. 23 is a diagram illustrating another configuration example of the three-dimensional space sharing system.

A three-dimensional space sharing system 100' illustrated in Fig. 23 includes a smartphone 310 and an ARHMD 320 instead of the AR device 130 of the three-dimensional space sharing system 100.

In such a configuration, even if the smartphone 310 does not have a self-position estimation function, it is possible to acquire position and pose information of a still image (image object) imaged by the smartphone 310 in cooperation with the ARHMD 320.

For example, the position and pose of the smartphone 310 can be estimated by performing object tracking of the smartphone 310 using a camera built in the ARHMD 320. In this case, the position and pose of the smartphone 310 determined when the still image has been imaged can be used as the position and pose information of the image object.

Furthermore, by superimposing and displaying an AR guide frame that indicates the position of the smartphone 310 on a captured image of a real space displayed on the ARHMD 320, it is possible to cause a user to perform imaging by using the smartphone 310 at a position according to the AR guide frame. In this case, the position and pose of the AR guide frame on the virtual space can be used as the position and pose information of the image object.

### (Presentation of UI indicating imaging order)

In a case where a plurality of imaging instruction guides or a plurality of image objects is deployed on the virtual space, virtual objects indicating an order with which a worker should perform imaging or an order in which the worker has actually performed imaging may be further presented.

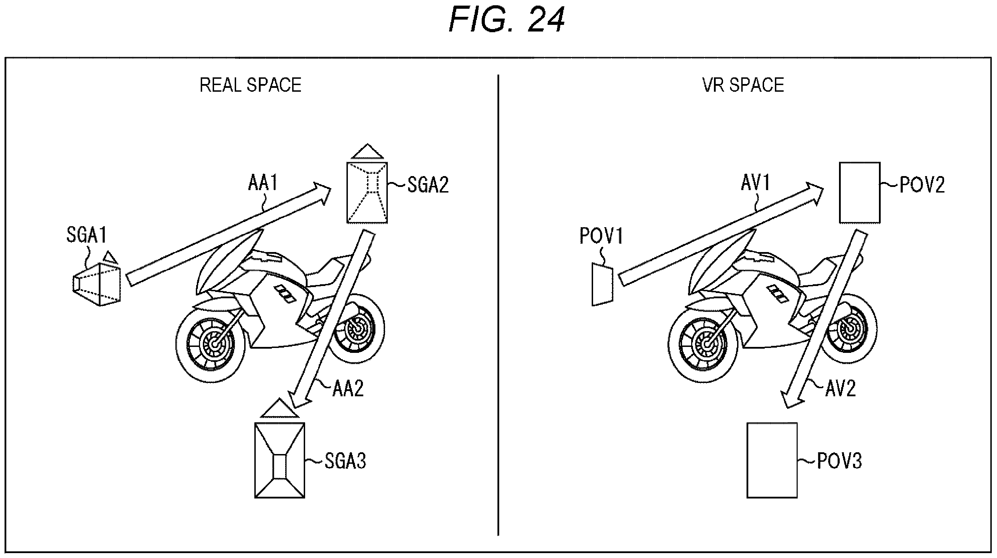

Fig. 24 is a diagram illustrating an example of virtual objects indicating an imaging order.

As illustrated on the left side in Fig. 24, three imaging instruction guides SGA1, SGA2, SGA3 are set on the real space. At this time, in order to clarify an imaging order intended by an instructing person, arrow images AA1, AA2 indicating an imaging order at respective corresponding imaging positions are superimposed and displayed as virtual objects, together with the imaging instruction guides SGA1, SGA2, SGA3, on a captured image.

Therefore, the worker can proceed with an imaging operation in the ordering of the respective imaging positions corresponding to the imaging instruction guides SGA1, SGA2, SGA3 as intended by the instructing person.

Furthermore, as illustrated on the right side in Fig. 24, in the VR space, image objects POV1, POV2, POV3 corresponding to imaged images imaged according to the imaging instruction guides SGA1, SGA2, SGA3 are deployed. At this time, in order to clarify the order in which the worker has actually performed the imaging, arrow images AV1, AV2 indicating the imaging order at the respective corresponding imaging positions are deployed as virtual objects, together with the image objects POV1, POV2, POV3, in the VR space.

Therefore, the instructing person can confirm whether or not the worker has proceeded with the imaging operation in the intended ordering.

### (Three-dimensional space sharing between real spaces)

In the above description, the three-dimensional space sharing using a virtual origin is implemented between the VR space and the real space. Alternatively, the three-dimensional space sharing using a virtual origin may be implemented between locations separated from each other in a real space. In this case, an imaging instruction guide (an imaging position and an imaging angle) is set by an imaging instruction object presented as AR content, for a real object existing at a location (second spot) different from a location (first spot) in which an imaging target object exists.

Even in such a configuration, a user at the second spot can perform imaging at an imaging angle intended by a user at the first spot. Furthermore, the user at the first spot can confirm whether or not the intention has been conveyed to the user at the second spot.

### (Imaging instruction using planar image)

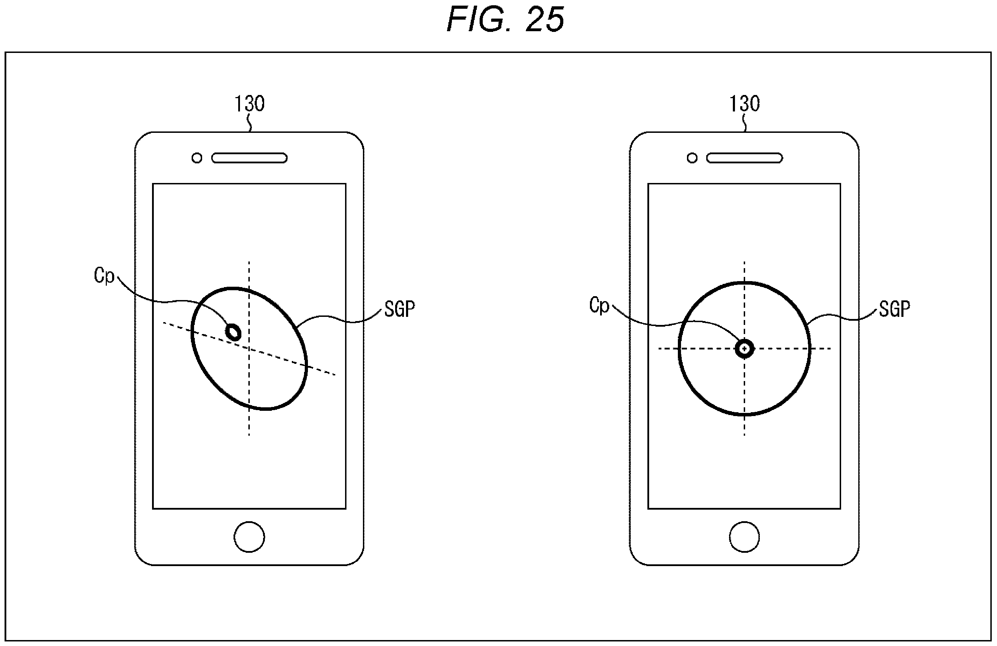

In the above description, the stereoscopic image indicating an imaging angle and an imaging range from any imaging position is deployed on the virtual space as the imaging instruction guide that is a virtual object. However, alternatively, it is sufficient if the imaging instruction guide is a three-dimensional representation image indicating at least an imaging angle from any imaging position. The three-dimensional representation image refers to a virtual object represented in a three-dimensional manner on a virtual space. For example, in a case where an imaging range is limited by the AR device 130 itself like a smartphone or the like, an imaging instruction guide SGP as a circular planar image as illustrated in Fig. 25 may be superimposed and displayed on a captured image (deployed on a virtual space).

The imaging instruction guide SGP is a planar image that has a plane facing in an imaging direction and that indicates an imaging angle from any imaging position. The position and size of the imaging instruction guide SGP on the captured image are fixed, and only the pose thereof changes in accordance with the pose of the AR device 130 (camera 231b). Specifically, depending on the pose of the AR device 130 at the imaging position, the imaging instruction guide SGP looks elliptical as illustrated on the left side in Fig. 25, or looks perfect circular as illustrated on the right side in Fig. 25. That is, a user (worker) confirms the captured image displayed on the AR device 130 to determine an imaging range, and in this state, the user (worker) adjusts the pose (imaging angle) of the AR device 130 such that the imaging instruction guide SGP looks perfect circular.

Furthermore, the imaging instruction guide SGP includes a circular center position guide Cp indicating the center position of the imaging range (the imaging direction of an imaging target object). The position of the center position guide Cp on the virtual space is fixed. The user (worker) finely adjusts the position of the AR device 130 (camera 231b) such that the center position guide Cp is positioned at the center of the imaging instruction guide SGP guided by dashed cross-hairs, in a state where the imaging instruction guide SGP looks perfect circular.

In this manner, the worker can image the imaging target object at an imaging position and an imaging angle intended by an instructing person while keeping confirming the pose (shape) of the imaging instruction guide SGP on the captured image and the position of the center position guide Cp.

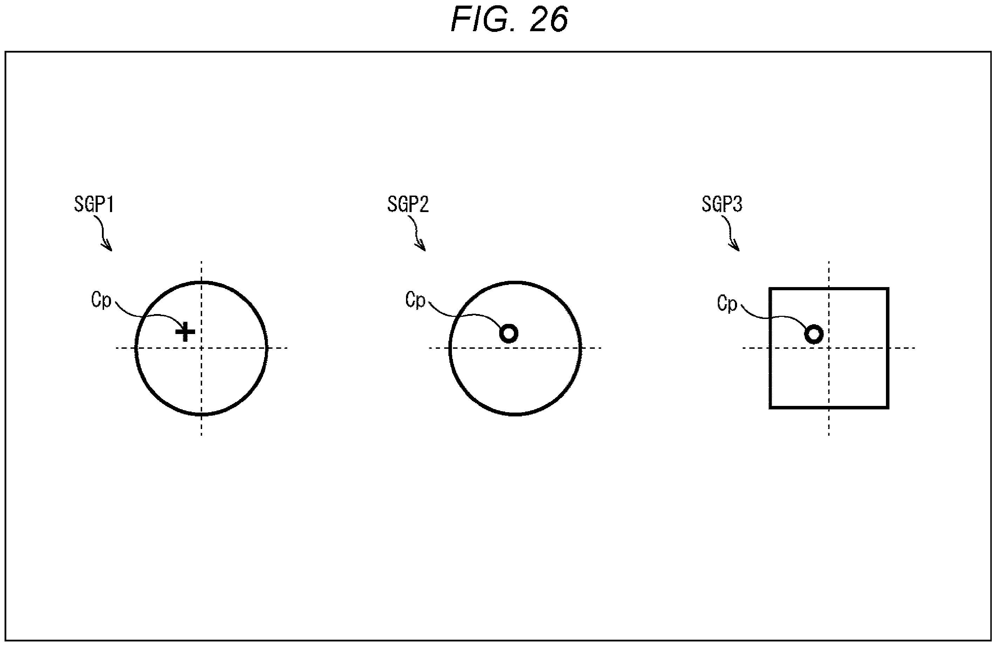

Note that the imaging instruction guide SGP and the center position guide Cp as the planar images are not limited to those in the display mode illustrated in Fig. 25. For example, like an imaging instruction guide SGP1 illustrated in Fig. 26, the center position guide Cp may have a cross shape. Furthermore, like an imaging instruction guide SGP2, only a dashed line that guides only the position in the horizontal direction, instead of guiding the center of the imaging instruction guide SGP2, may be shown. Moreover, the shape of the imaging instruction guide SGP is not limited to a perfect circular shape, and is simply required to be any shape as long as the shape can visually urge the worker to adjust an imaging angle to the imaging angle intended by the instructing person. Specifically, like an imaging instruction guide SGP3, the shape may be a square shape, or may be another regular polygonal shape.

### (Imaging instruction performed by using both stereoscopic image and planar image)

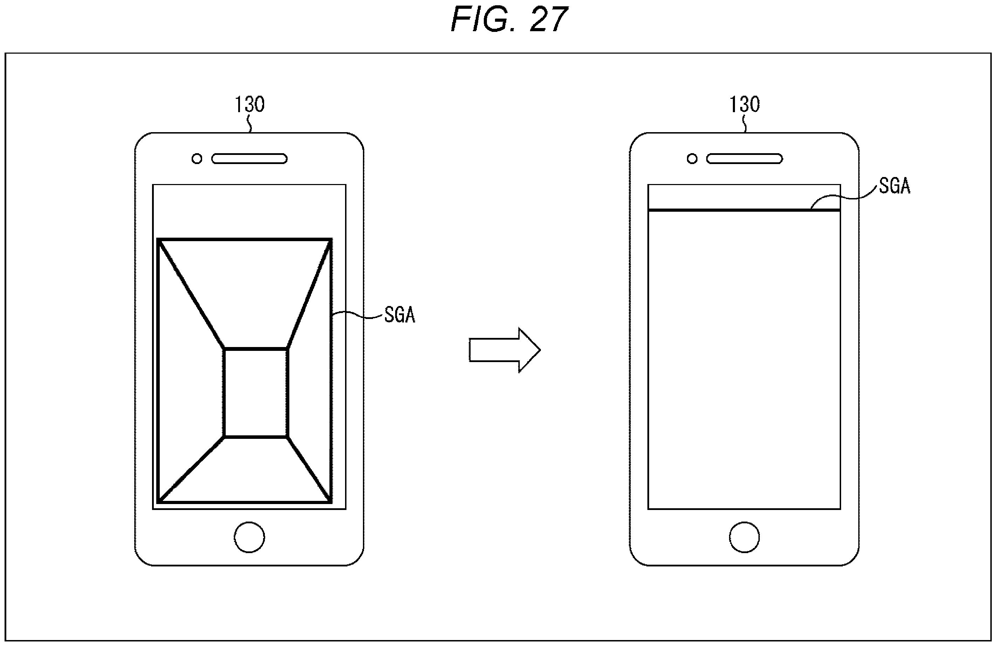

The imaging instruction guide SGA as a stereoscopic image allows its entire image to be confirmed, if a certain distance, on the virtual space that is being subjected to the three-dimensional space sharing, is kept between the imaging instruction guide SGA and the AR device 130 (camera), as illustrated on the left side in Fig. 27. However, when the camera moves to a desired imaging position and the distance between the imaging instruction guide SGA and the camera becomes shorter than a prescribed distance, the entire image of the imaging instruction guide SGA cannot be confirmed as illustrated on the right side in Fig. 27.

In this case, a worker performs imaging without being able to have confirmation as to whether or not the imaging position and the imaging angle of the camera at that time are the imaging position and the imaging angle intended by an instructing person. That is, only with the imaging instruction guide SGA as a stereoscopic image, there is a possibility that detailed adjustment of the position and pose of the camera cannot be performed.

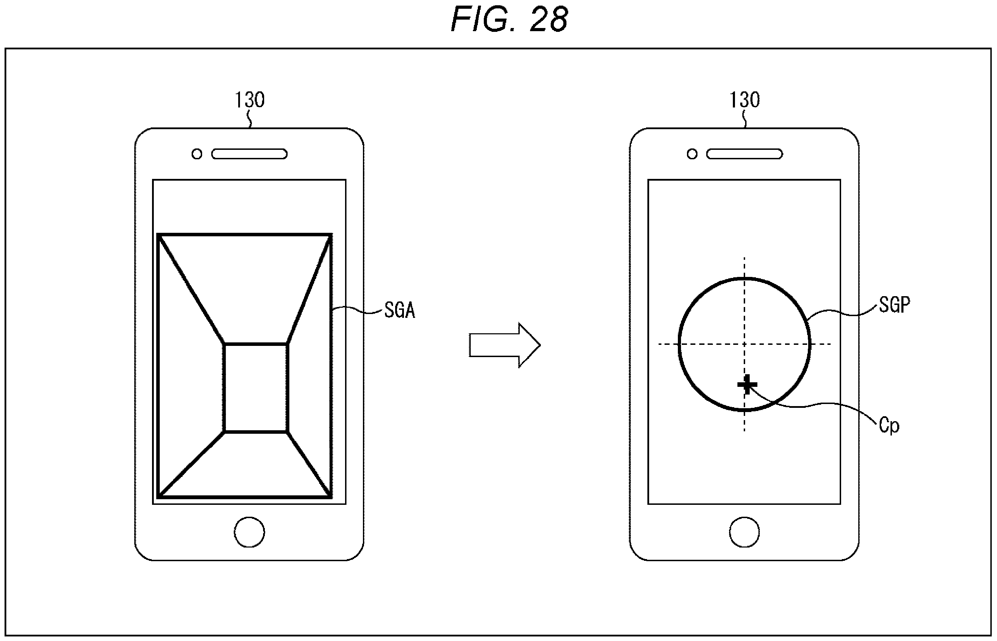

Therefore, as illustrated in Fig. 28, in a case where the camera moves to a desired imaging position and the distance between the imaging instruction guide SGA and the camera becomes shorter than a prescribed distance (for example, 5 cm), the imaging instruction guide SGP as a planar image is displayed in place of the imaging instruction guide SGA. The position and size of the imaging instruction guide SGP on a captured image are fixed, and thus the visibility of the worker can be ensured, and the detailed adjustment of the position and pose of the camera can be achieved.

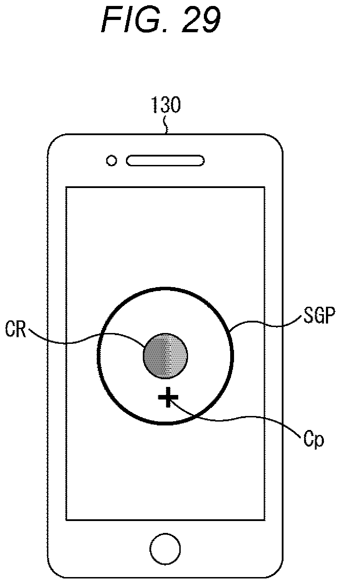

Note that, in the above description, the position of the camera is adjusted such that the center position guide Cp is positioned at the center of the imaging instruction guide SGP guided by the dashed cross-hairs. In addition to the above mode, in a case where there is no need to pursue a highly accurate imaging position and imaging angle, the position of the camera may be adjusted such that the center position guide Cp is positioned within a center region CR displayed inside the imaging instruction guide SGP, as illustrated in Fig. 29.

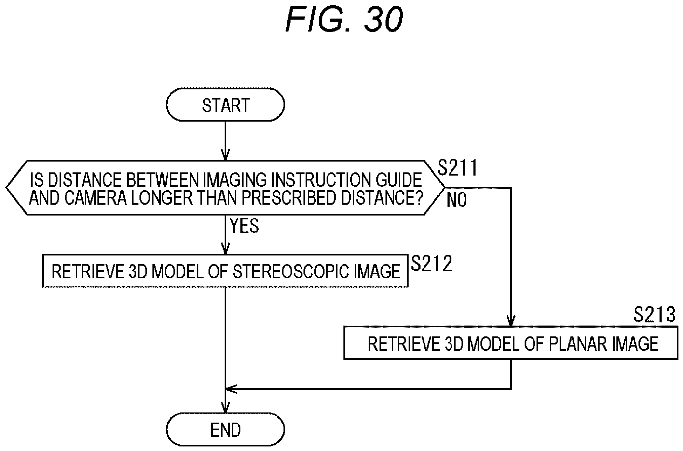

Here, with reference to the flowchart of Fig. 30, the flows of 3D model retrieving processing for enabling the imaging instruction performed by using both the stereoscopic image and the planar image described above will be described. The processing of Fig. 30 is executed as step S95 (the processing of retrieving a 3D model for an imaging instruction guide) in the data reception processing of Fig. 15.

In step S211, the client (AR device 130) determines whether or not a distance between an imaging instruction guide on the virtual space and the camera is longer than a prescribed distance, on the basis of position and pose information included in the metadata of the imaging instruction guide.

In a case where it is determined in step S211 that the distance between the imaging instruction guide and the camera is longer than the prescribed distance, the flow proceeds to step S212, and the client retrieves a 3D model of a stereoscopic image from the recording unit 232 as a 3D model for the imaging instruction guide.

On the other hand, in a case where it is determined in step S211 that the distance between the imaging instruction guide and the camera is not longer (is shorter) than the prescribed distance, the flow proceeds to step S213, and the client retrieves a 3D model of a planar image from the recording unit 232 as a 3D model for the imaging instruction guide.

According to the above processing, even in a case where the camera moves to a desired imaging position and the distance between the imaging instruction guide and the camera becomes shorter than a prescribed distance, it is possible to ensure the visibility of the worker and to achieve detailed adjustment of the position and pose of the camera.

### <6. Configuration example of computer>

The series of processing described above can be executed through hardware, or can be executed through software. In a case where the series of processing is executed through software, a program included in the software is installed from a program recording medium on a computer incorporated in dedicated hardware, a general-purpose personal computer, or the like.

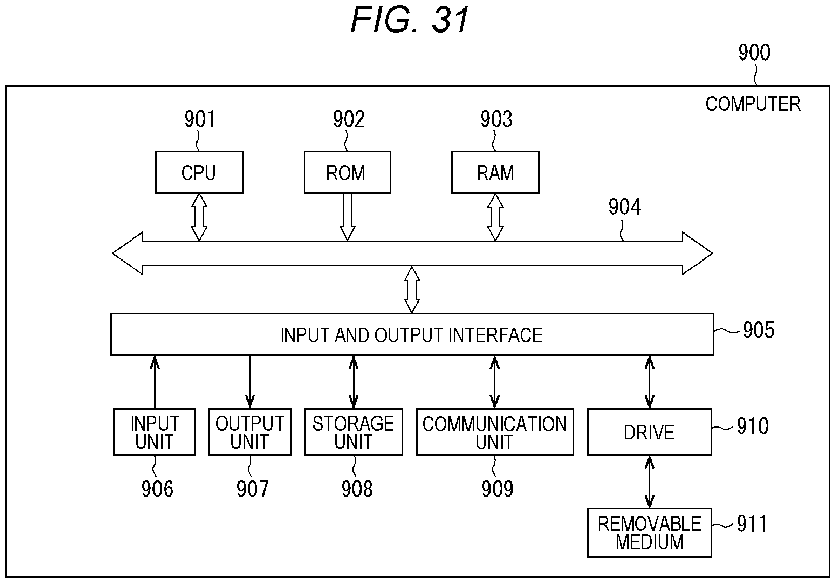

Fig. 31 is a block diagram illustrating a configuration example of hardware of a computer that executes the series of processing described above through a program.

The AR device 130 as an information processing device to which the technology according to the present disclosure can be applied is implemented by a computer 900 having the configuration illustrated in Fig. 31.

A CPU 901, a read only memory (ROM) 902, and a random access memory (RAM) 903 are connected to each other via a bus 904.

An input and output interface 905 is further connected to the bus 904. An input unit 906 including a keyboard, a mouse, and the like, and an output unit 907 including a display, a speaker, and the like are connected to the input and output interface 905. Furthermore, a storage unit 908 including a hard disk, a nonvolatile memory, and the like, a communication unit 909 including a network interface and the like, and a drive 910 that drives a removable medium 911 are connected to the input and output interface 905.

In the computer configured as described above, for example, the CPU 901 loads a program stored in the storage unit 908 into the RAM 903 via the input and output interface 905 and the bus 904 and executes the program to execute the series of processing described above.

The program to be executed by the CPU 901 is provided, for example, by being recorded in the removable medium 911, or via a wired or wireless transmission medium such as a local area network, the Internet, or digital broadcast, and is installed in the storage unit 908.

Note that the program to be executed by the computer may be a program in which processing is executed in the time-series order described herein, or may be a program in which processing is executed in parallel or at a necessary timing such as a timing at which retrieving is performed, or the like.

The embodiment of the present disclosure is not limited to the embodiment described above, and various modifications can be made without departing from the gist of the present disclosure.

Furthermore, the effects described herein are merely examples and are not limited, and other effects may be provided.

Moreover, the present disclosure may have the following configurations.
(1) An information processing device including:
   a display control unit configured to cause a captured image captured by a camera in a first space in which an imaging target object exists to be displayed; and
   a superimposition control unit configured to cause, on the basis of an imaging position and an imaging angle, for the imaging target object, set in a second space that is being subjected to space sharing with the first space, an imaging instruction guide that guides imaging at the imaging angle to be superimposed and displayed as a virtual object, at a position, on the captured image, corresponding to the imaging position.
(2) The information processing device according to (1), in which
   the imaging position and the imaging angle are set for a corresponding object corresponding to the imaging target object, the corresponding object being present in the second space.
(3) The information processing device according to (2), in which
   the corresponding object is a virtual object on a virtual space.
(4) The information processing device according to (2), in which
   the corresponding object is a real object existing at a location different from the first space.
(5) The information processing device according to (1), in which
   the first space and the second space are subjected to three-dimensional space sharing using a virtual origin.
(6) The information processing device according to any one of (1) to (5), in which
   the imaging instruction guide is a three-dimensional representation image indicating at least the imaging angle from the imaging position.
(7) The information processing device according to (6), in which
   the imaging instruction guide includes a stereoscopic image indicating the imaging angle and an imaging range from the imaging position, the stereoscopic image having a frustum shape with a lower base face facing in an imaging direction or a columnar shape with one of base faces facing in the imaging direction.
(8) The information processing device according to (6), in which
   the imaging instruction guide includes a planar image indicating the imaging angle from the imaging position, the planar image having a plane facing in an imaging direction.
(9) The information processing device according to (7) or (8), in which
   the superimposition control unit is configured to cause at least one of a size or a pose of the imaging instruction guide to change in accordance with a position and a pose of the camera.
(10) The information processing device according to any one of (1) to (5), in which,
   in a case where a still image is imaged by the camera at a predetermined position in the first space, the superimposition control unit causes the still image to be superimposed and displayed as the virtual object, at a position, on the captured image, corresponding to the predetermined position.
(11) The information processing device according to (10), in which
   the superimposition control unit is configured to cause either the imaging instruction guide or the still image to be hidden in accordance with a relative positional relationship between the imaging instruction guide and the still image.
(12) The information processing device according to (11), in which
   the superimposition control unit is configured to determine which one of the imaging instruction guide and the still image is to be hidden in accordance with an evaluation value calculated on the basis of the relative positional relationship between the imaging instruction guide and the still image.
(13) The information processing device according to (11), in which
   the superimposition control unit is configured to cause either the imaging instruction guide or the still image to be hidden in accordance with a user evaluation value in the second space with respect to the relative positional relationship between the imaging instruction guide and the still image.
(14) The information processing device according to (11), in which,
   in a case where a relative distance between the imaging instruction guide and the still image is shorter than a prescribed distance, the superimposition control unit causes one with an earlier generated time, out of the imaging instruction guide and the still image, to be hidden.
(15) The information processing device according to any one of (1) to (6), in which
   the superimposition control unit is configured to cause, together with a plurality of the imaging instruction guides, an arrow image indicating an imaging order at a plurality of the imaging positions corresponding to the plurality of the imaging instruction guides to be superimposed and displayed, as the virtual object, on the captured image.
(16) The information processing device according to (1), further including:
   a communication control unit configured to cause the imaging position and the imaging angle to be acquired via a network, the imaging position and the imaging angle being set in a device configured to provide the second space.
(17) The information processing device according to (16), in which
   the communication control unit is configured to transmit, to the device via the network, a still image imaged by the camera at a predetermined position in the first space.
(18) The information processing device according to (17), in which
   the still image is deployed as the virtual object, at a position that corresponds to the predetermined position, the position that corresponds to the predetermined position being in the second space provided by the device.
(19) An information processing method executed by an information processing device, the information processing method including:
   displaying a captured image, the captured image being captured by a camera in a first space in which an imaging target object exists; and
   superimposing and displaying, as a virtual object, on the basis of an imaging position and an imaging angle, for the imaging target object, set in a second space that is being subjected to space sharing with the first space, an imaging instruction guide that guides imaging at the imaging angle, at a position, on the captured image, corresponding to the imaging position.
(20) A program that causes a computer to execute processing including:
   displaying a captured image, the captured image being captured by a camera in a first space in which an imaging target object exists; and
   superimposing and displaying, as a virtual object, on the basis of an imaging position and an imaging angle, for the imaging target object, set in a second space that is being subjected to space sharing with the first space, an imaging instruction guide that guides imaging at the imaging angle, at a position, on the captured image, corresponding to the imaging position.

### REFERENCE SIGNS LIST

- 100, 100': Three-dimensional space sharing system
- 110: VRHMD
- 130: AR device
- 150: Server
- 170: DB
- 216: Control unit
- 225: Display control unit
- 236: Control unit
- 245: Display control unit
- 251: Superimposition control unit
- 310: Smartphone
- 320: ARHMD

## Claims

1. An information processing device comprising:
a display control unit configured to cause a captured image captured by a camera in a first space in which an imaging target object exists to be displayed; and
a superimposition control unit configured to cause, on a basis of an imaging position and an imaging angle, for the imaging target object, set in a second space that is being subjected to space sharing with the first space, an imaging instruction guide that guides imaging at the imaging angle to be superimposed and displayed as a virtual object, at a position, on the captured image, corresponding to the imaging position.

2. The information processing device according to claim 1, wherein
the imaging position and the imaging angle are set for a corresponding object corresponding to the imaging target object, the corresponding object being present in the second space.

3. The information processing device according to claim 2, wherein
the corresponding object comprises a virtual object on a virtual space.

4. The information processing device according to claim 2, wherein
the corresponding object comprises a real object existing at a location different from the first space.

5. The information processing device according to claim 1, wherein
the first space and the second space are subjected to three-dimensional space sharing using a virtual origin.

6. The information processing device according to claim 1, wherein
the imaging instruction guide comprises a three-dimensional representation image indicating at least the imaging angle from the imaging position.

7. The information processing device according to claim 6, wherein
the imaging instruction guide includes a stereoscopic image indicating the imaging angle and an imaging range from the imaging position, the stereoscopic image having a frustum shape with a lower base face facing in an imaging direction or a columnar shape with one of base faces facing in the imaging direction.

8. The information processing device according to claim 6, wherein
the imaging instruction guide includes a planar image indicating the imaging angle from the imaging position, the planar image having a plane facing in an imaging direction.

9. The information processing device according to claim 6, wherein
the superimposition control unit is configured to cause at least one of a size or a pose of the imaging instruction guide to change in accordance with a position and a pose of the camera.

10. The information processing device according to claim 1, wherein
in a case where a still image is imaged by the camera at a predetermined position in the first space, the superimposition control unit causes the still image to be superimposed and displayed as the virtual object, at a position, on the captured image, corresponding to the predetermined position.

11. The information processing device according to claim 10, wherein
the superimposition control unit is configured to cause either the imaging instruction guide or the still image to be hidden in accordance with a relative positional relationship between the imaging instruction guide and the still image.

12. The information processing device according to claim 11, wherein
the superimposition control unit is configured to determine which one of the imaging instruction guide and the still image is to be hidden in accordance with an evaluation value calculated on a basis of the relative positional relationship between the imaging instruction guide and the still image.

13. The information processing device according to claim 11, wherein
the superimposition control unit is configured to cause either the imaging instruction guide or the still image to be hidden in accordance with a user evaluation value in the second space with respect to the relative positional relationship between the imaging instruction guide and the still image.

14. The information processing device according to claim 11, wherein
in a case where a relative distance between the imaging instruction guide and the still image is shorter than a prescribed distance, the superimposition control unit causes one with an earlier generated time, out of the imaging instruction guide and the still image, to be hidden.

15. The information processing device according to claim 1, wherein
the superimposition control unit is configured to cause, together with a plurality of the imaging instruction guides, an arrow image indicating an imaging order at a plurality of the imaging positions corresponding to the plurality of the imaging instruction guides to be superimposed and displayed, as the virtual object, on the captured image.

16. The information processing device according to claim 1, further comprising:
a communication control unit configured to cause the imaging position and the imaging angle to be acquired via a network, the imaging position and the imaging angle being set in a device configured to provide the second space.

17. The information processing device according to claim 16, wherein
the communication control unit is configured to transmit, to the device via the network, a still image imaged by the camera at a predetermined position in the first space.

18. The information processing device according to claim 17, wherein
the still image is displayed as the virtual object, at a position that corresponds to the predetermined position, the position that corresponds to the predetermined position being in the second space provided by the device.

19. An information processing method executed by an information processing device, the information processing method comprising:
displaying a captured image, the captured image being captured by a camera in a first space in which an imaging target object exists; and
superimposing and displaying, as a virtual object, on a basis of an imaging position and an imaging angle, for the imaging target object, set in a second space that is being subjected to space sharing with the first space, an imaging instruction guide that guides imaging at the imaging angle, at a position, on the captured image, corresponding to the imaging position.

20. A program that causes a computer to execute processing including:
displaying a captured image, the captured image being captured by a camera in a first space in which an imaging target object exists; and
superimposing and displaying, as a virtual object, on a basis of an imaging position and an imaging angle, for the imaging target object, set in a second space that is being subjected to space sharing with the first space, an imaging instruction guide that guides imaging at the imaging angle, at a position, on the captured image, corresponding to the imaging position.
